# EUROPEAN PATENT SPECIFICATION

(11) **EP 0 773 235 B1**
(45) Date of publication and mention of the grant of the patent: **26.05.1999**
(21) Application number: 96113920.1
(22) Date of filing: 30.08.1996
(51) Int. Cl.: C08F 10/00, C08F 4/651

(54) **Polymerization of alpha-olefins**
Alpha-Olefin-Polymerisation
Polymérisation d'alpha-oléfines

(30) Priority: 31.08.1995 JP 223959/95; 31.08.1995 JP 223960/95; 02.08.1996 JP 204815/96; 02.08.1996 JP 204968/96
(43) Date of publication of application: 14.05.1997
(73) Proprietor: MITSUBISHI CHEMICAL CORPORATION, Chiyoda-ku, Tokyo-to (JP)
(72) Inventor: Ishii, Koichiro, c/o Mitsubishi Chem. Corp., Yokkaichi-shi, Mie-ken (JP); Fujita, Takashi, c/o Mitsubishi Chem. Corp., Yokkaichi-shi, Mie-ken (JP)
(74) Representative: Hansen, Bernd, Dr. Dipl.-Chem.

(56) References cited:
- GB-A- 2 057 469
- US-A- 5 192 729
- DATABASE WPI Derwent Publications Ltd., London, GB; AN 86-28988 XP002018689 & JP-A-61 213 209 (MITSUBISHI) , 22 September 1986

## Description

### BACKGROUND OF THE INVENTION

### Field of the Invention

The present invention relates to a catalyst for alpha-olefin polymerization, and a process for polymerizing an alpha-olefin using the same. More particularly, the present invention relates to a catalyst for alpha-olefin polymerization, comprising a specific solid catalyst component and an organoaluminum compound component in combination, with which catalyst an alpha-olefin polymer having excellent moldability and processability and extremely high stereoregularity can be produced in high yield, and to a process for polymerizing an alpha-olefin using the catalyst.

### Related Art

In recent years, there have been made a large number of proposals in which solid components comprising as essential components titanium, magnesium and halogen are used to produce highly-stereoregular alpha-olefin polymers in high yield (see, for instance, Japanese Laid-Open Patent Publications Nos. 63310/1982, 63311/1982, 63312/1982, 138705/1983, 138706/1983 and 138711/1983). Of these, those polymerization catalysts which comprise the above-described solid component, an organoaluminum compound and a silicon compound in combination are of great utility. Moreover, there have been proposed various methods such as a method in which an organic acid ester compound or organic acid halide compound is brought into contact with the above-described solid component when the solid component is prepared, and a method in which a sulfonic ester is brought into contact with the solid component when the solid component is prepared.

However, as far as we know, those polymers which are produced by the use of such a catalyst system are still insufficient in stereoregularity, and also have, in general, narrow molecular-weight distribution, so that they are poor in moldability and processability. For this reason, the above catalyst system has been expected to be further improved.

Accordingly, a catalyst with which an alpha-olefin polymer having higher stereoregularity and broad molecular-weight distribution can be obtained, and a process for producing such an alpha-olefin polymer have been demanded.

### SUMMARY OF THE INVENTION

In order to solve the aforementioned problems, we made studies in various catalyst components. As a result, it was found that an alpha-olefin polymer having broad molecular-weight distribution and extremely high stereoregularity can be obtained in high yield when a solid catalyst component, which has been prepared by contacting a Ti-Mg-Halogen based solid catalyst component with a specific organic sulfonic ester compound and another specified electron-donating compound, is used along with an organoaluminum compound component and, optionally, a silicon compound component. The present invention has been accomplished on the basis of the above finding.

A catalyst for alpha-olefin polymerization according to the present invention in one aspect thereof, Aspect I, comprises the following components (A), (B) and (C) in combination:
Component (A) which is a solid catalyst component prepared by bringing the following components (A1), (A2) and (A3) into contact with each other:
   component (A1) which is a solid component comprising as essential components titanium, magnesium and a halogen,
   component (A2) which is at least one compound selected from organic acid ester compounds, organic acid halide compounds and ether compounds, and
   component (A3) which is a sulfonic ester compound represented by the following general formula [I]:

      R¹SO₃R² [I]

      wherein R¹ and R² are a hydrocarbon group;
Component (B) which is an organoaluminum compound component; and
Component (C) which is a silicon compound represented by the following general formula [II]:

   R³R⁴ ₃₋ₙSi(OR⁵)ₙ [II]

   wherein R³ and R⁴, which may be the same or different, represent a hydrocarbon group or an alkoxy group, R⁵ is a hydrocarbon group, n is a number of 1 to 3.

A catalyst for alpha-olefin polymerization according to the present invention in another aspect thereof, Aspect II, comprises the following components (A) and (B) in combination:
Component (A) which is a solid catalyst component prepared by bringing the following components (A1), (A2) and (A3) into contact with each other:
   component (A1) which is a solid component comprising as essential components titanium, magnesium and a halogen,
   component (A2) which is a silicon compound represented by the following general formula [II]:

      R³R⁴ ₃₋ₙsi(OR⁵)ₙ [II]

      wherein R³ and R⁴, which may be the same or different, represent a hydrocarbon group or an alkoxy group, R⁵ is a hydrocarbon group, n is a number of 1 to 3, and
   component (A3) which is a sulfonic ester compound represented by the following general formula [I]:

      R¹SO₃R² [I]

      wherein R¹ and R² are a hydrocarbon group; and
Component (B) which is an organoaluminum compound component.

Further, the present invention also relates to a process for polymerizing an alpha-olefin, using the above-described catalyst. Namely, the process for polymerizing an alpha-olefin according to the present invention comprises contacting an alpha-olefin with a catalyst comprising the above-described components (A) and (B) and optionally (C) in combination to polymerize the alpha-olefin.

According to the present invention, alpha-olefin polymers having broad molecular-weight distribution and extremely high stereoregularity can be obtained in high yield. Therefore, according to the present invention, alpha-olefin polymers useful for automobile parts, household appliance parts, packaging materials and the like which are required to have higher rigidity can be obtained.

### DETAILED DESCRIPTION OF PREFERRED EMBODIMENT OF THE INVENTION

Production of an alpha-olefin polymer according to the present invention is characterized in the use of a catalyst comprising specific components (A) and (B) and optionally (C) in combination which is characterized, among others, by the use of a specified sulfonic ester as what is called "internal donor".

### [Catalyst for Olefin Polymerization]

The catalyst according to the present invention comprises specific components (A) and (B) and optionally (C) in combination. It is noted that the expression "comprises in combination" as used herein follows conventional construction of the word "comprise" and thus is not only for a catalyst containing the mentioned components (i.e., the Components (A), (B) and (C)) only, and does not exclude a catalyst containing other components in addition to the mentioned components in such a limit that the effects of the present invention are not impaired.

### (1) Solid Catalyst Component

The Component (A) of the catalyst of the present invention is one produced by bringing a specific solid component (component (A1)), a specific organic acid ester compound, organic acid halide compound or ether compound, or a specific organosilicon compound (component (A2)), and a specific sulfonic ester compound (component (A3)) into contact with each other. It is not excluded that components suitable for the purposes, other than the above-described three essential components co-exist in the Component (A) of the present invention.

### <Component (A1)>

The solid component for use in the present invention is one comprising as essential components titanium, magnesium and a halogen. The expression "comprising as essential components" as used herein indicates that the solid component again follows the conventional construction of the word "comprise" and thus can contain, in addition to the above-mentioned three components, other elements which are suitable for the purposes, that each of the elements can exist in the solid component as any compound suitable for the purposes, and that the elements can exist in the solid component in the state of being combined with each other.

The solid component comprising titanium, magnesium and a halogen is a known product as a solid catalyst component in Ziegler-Natta type catalysts. For instance, solid components described in the following patent publications can be used: Japanese Laid-Open Patent Publications Nos. 45688/1978, 3894/1979, 31092/1979, 39483/1979, 94591/1979, 118484/1979, 131589/1979, 75411/1980, 90510/1980, 90511/1980, 127405/1980, 147507/1980, 155003/1980, 18609/1981, 70005/1981, 72001/1981, 86905/1981, 90807/1981, 155206/1981, 3803/1982, 34103/1982, 92007/1982, 121003/1982, 5309/1983, 5310/1983, 5311/1983, 8706/1983, 27732/1983, 32604/1983, 32605/1983, 67703/1983, 117206/1983, 127708/1983, 183708/1983, 183709/1983, 149905/1984, 149906/1984 and 108008/1988.

Examples of a magnesium compound which can be the source of magnesium for use in the present invention include magnesium dihalides, dialkoxymagnesiums, alkoxymagnesium halides, magnesium oxy halides, dialkylmagnesiums, magnesium oxide, magnesium hydroxide and carboxylates of magnesium. Of these, those magnesium compounds which are represented by the formula Mg(OR⁶)₂₋ₘXₘ (in which R⁶ represents a hydrocarbon group, preferably a hydrocarbon group having approximately 1 to 10 carbon atoms, X represents a halogen, and m is a number of 0 to 2), such as magnesium dihalides and dialkoxymagnesiums are preferred.

Examples of a titanium compound which can be the source of titanium include those compounds which are represented by the general formula Ti(OR⁷)₄₋ₚXₚ, in which R⁷ represents a hydrocarbon group, preferably a hydrocarbon group having approximately 1 to 10 carbon atoms, X represents a halogen, and p is a number of 0 to 4. Specific examples of such a titanium compound include TiCl₄, TiBr₄, Ti(OC₂H₅)Cl₃, Ti(OC₂H₅)₂Cl₂, Ti(OC₂H₅)₃Cl, Ti(O-iC₃H7)Cl₃, Ti(O-nC₄H₉)Cl₃, Ti(O-nC₄H₉)₂Cl₂, Ti(OC₂H₅)Br₃, Ti(OC₂H₅)(O-nC₄H₉)₂Cl, Ti(O-nC₄H₉)₃Cl, Ti(OC₆H₅)Cl₃, Ti(O-iC₄H₉)₂Cl₂, Ti(O-nC₅H₁₁)Cl₃, Ti(O-nC₆H₁₃)Cl₃, Ti(OC₂H₅)₄, Ti(O-nC₃H₇)₄, Ti(O-nC₄H₉)₄, Ti(O-iC₄H₉)₄, Ti(O-nC₆H₁₃)₄, Ti(O-nC₈H₁₇)₄ and Ti(OCH₂CH(C₂H₅)C₄H₉)₄.

Further, a molecular compound obtained by allowing an electron-donating compound, which will be described later, to react with TiX'₄, in which X' is a halogen, can also be used as the source of titanium. Specific examples of such a molecular compound include TiCl₄•CH₃COC₂H₅, TiCl₄•CH₃CO₂C₂H₅, TiCl₄•C₆H₅NO₂, TiCl₄•CH₃COCl, TiCl₄•C₆H₅COCl, TiCl₄•C₆H₅CO₂C₂H₅, TiCl₄•ClCOC₂H₅ and TiCl₄•C₄H₄O.

Furthermore, there can also be used such titanium compounds as TiCl₃ including those obtained by reducing TiCl₄ with hydrogen, a metal aluminum or an organometallic compound, TiBr₃, Ti(OC₂H₅)Cl₂, TiCl₂, dicyclopentadienyltitanium dichloride and cyclopentadienyltitanium trichloride. Of these titanium compounds, TiCl₄, Ti(OC₄H₉)₄ and Ti(OC₂H₅)Cl₃ are preferred.

Halogen is usually supplied from the above-described magnesium and/or titanium halogen compounds. However, halogen can also be supplied from other halogen sources such as known halogenating agents, for example, aluminum halides such as AlCl₃, silicon halides such as SiCl₄, phosphorus halides such as PCl₃ and PCl₅, tungsten halides such as WCl₆, and molybdenum halides such as MoCl₅. Halogen contained in the catalyst component may be fluorine, chlorine, bromine or iodine, or a mixture thereof; chlorine is particularly preferred.

Further, when this solid component is prepared, an electron donor can also be used as an internal donor. Examples of the electron donor which can be utilized for the production of the solid component include oxygen-containing electron donors such as alcohols, phenols, aldehydes and ketones, and nitrogen-containing electron donors such as amines and nitriles. Two or more of the above electron donors can be used in combination.

### <Component (A2)>

In the present invention, at least one compound selected from organic acid ester compounds, organic acid halide compounds, ether compounds and specified silicon compounds is used as the component (A2) depending on what Aspect it is in.

Organic acid ester compounds and organic acid halide compounds which can be used in the present invention are preferably carboxylic ester compounds and carboxylic acid halide compounds. Specific examples of these compounds are as follows: (a) organic acid monoesters, for instance, methyl formate, methyl acetate, ethyl acetate, vinyl acetate, propyl acetate, cyclooctyl acetate, cyclohexyl acetate, ethyl cellosolve acetate, ethyl propionate, methyl butyrate, ethyl valerate, ethyl stearate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, cellosolve benzoate, methyl toluate, ethyl toluate, amyl toluate, ethyl ethylbenzoate, methyl anisate, ethyl anisate, ethyl ethoxybenzoate, gamma-butyrolactone, alpha-valerolactone, coumarin and phthalide; (b) organic acid di or higher esters having 2 to 20 carbon atoms, for instance, diethyl phthalate, dibutyl phthalate, diheptyl phthalate, diethyl succinate, dibutyl maleate, diethyl 1,2-cyclohexanecarboxylate, ethylene carbonate, norbornanedienyl-1,2-dimethylcarboxylate, n-hexyl cyclopropane-1,2-dicarboxylate and diethyl 1,1-cyclobutanedicarboxylate; (c) alkoxy ester compounds, for instance, ethyl 2-(ethoxymethyl)benzoate, ethyl 2-(t-butoxymethyl)benzoate, ethyl 3-ethoxy-2-phenylpropionate, ethyl 3-ethoxypropionate, ethyl 3-ethoxy-2-s-butyl-propionate and ethyl 3-ethoxy-2-t-butylpropionate; (d) ketoester compounds, for instance, ethyl 2-benzoylbenzoate, ethyl 2-(4'-methylbenzoyl)benzoate and ethyl 2-benzoyl-4,5-dimethylbenzoate; and (e) acid halides having 2 to 15 carbon atoms, for instance, acetyl chloride, benzoyl chloride, toluic acid chloride, anisic acid chloride, phthaloyl chloride and isophthaloyl chloride. Of these, benzoic acid ester compounds, phthalic acid diester compounds, cellosolve acetate compounds and phthalic acid dihalide compounds are preferred. Of these, phthalic acid diester compounds, cellosolve acetate compounds and phthalic acid dihalide compounds are more preferred.

Ethers which can be used in the present invention are preferably diether compounds, and specifically 2,2-dimethyl-1,3-dimethoxypropane, 2,2-diisopropyl-1,3-dimethoxypropane, 2,2-diisobutyl-1,3-dimethoxypropane, 2-isopropyl-2-isobutyl-1,3-dimethoxypropane, 2-isopropyl-2-s-butyl-1,3-dimethoxypropane, 2-t-butyl-2-methyl-1,3-dimethoxypropane, 2-t-butyl-2-isopropyl-1,3-dimethoxypropane, 2,2-dicyclopentyl-1,3-dimethoxypropane, 2,2-dicyclohexyl-1,3-dimethoxypropane, 2,2-diphenyl-1,3-dimethoxypropane, 2,2-dimethyl-1,3-diethoxypropane and 2,2-diisobutyl-1,3-diethoxypropane.

The specified organosilicon compounds used in Aspect 0 and II as an internal donor will be described in detail hereinbelow in respect of Component (C) in Aspect I.

### <Component (A3)>

The sulfonic ester compound for use in the present invention is one represented by the formula R¹SO₃R², in which R¹ and R² are a hydrocarbon group. Specifically, R¹ is preferably an aromatic hydrocarbon group, alicyclic hydrocarbon group or branched aliphatic hydrocarbon group, more preferably an aromatic hydrocarbon group having 6 to 20 carbon atoms, an alicyclic hydrocarbon group having 5 to 15 carbon atoms, or a branched aliphatic hydrocarbon group having 3 to 10 carbon atoms, most preferably an aromatic hydrocarbon group having 6 to 10 carbon atoms, an alicyclic hydrocarbon group having 5 to 10 carbon atoms, or a branched aliphatic hydrocarbon group having 3 to 6 carbon atoms, particularly an aromatic hydrocarbon group having 6 to 10 carbon atoms. R² is preferably an aliphatic hydrocarbon group (including an alicyclic hydrocarbon group), more preferably a branched aliphatic hydrocarbon group or an alicyclic hydrocarbon group, most preferably branched aliphatic hydrocarbon group or an alicyclic hydrocarbon group in which the carbon atom directly bound to the oxygen atom, that is, the carbon atom at the alpha-position, is secondary or tertiary carbon, specifically a branched aliphatic hydrocarbon group branched at the carbon atom at the alpha-position, having 3 to 10 carbon atoms, or an alicyclic hydrocarbon group having 5 to 15 carbon atoms, preferably a branched aliphatic hydrocarbon group branched at the carbon atom at the alpha-position, having 3 to 8 carbon atoms, or an alicyclic hydrocarbon group having 5 to 10 carbon atoms.

Specific examples of the sulfonic ester compound which can be used in the present invention are as follows:

Examples of the aromatic sulfonic ester include methyl benzenesulfonate, ethyl benzenesulfonate, butyl benzenesulfonate, hexyl benzenesulfonate, t-butyl benzenesulfonate, phenyl benzenesulfonate, methyl p-toluenesulfonate, ethyl p-toluenesulfonate, butyl p-toluenesulfonate, hexyl p-toluenesulfonate, cyclohexyl p-toluenesulfonate, t-butyl p-toluenesulfonate, phenyl p-toluenesulfonate, methyl p-ethylbenzenesulfonate, ethyl p-ethylbenzenesulfonate, butyl p-ethylbenzenesulfonate, hexyl p-ethylbenzenesulfonate, t-butyl p-ethylbenzenesulfonate, phenyl p-ethylbenzenesulfonate, methyl p-t-butylbenzene-sulfonate, ethyl p-t-butylbenzenesulfonate, butyl p-t-butylbenzenesulfonate, hexyl p-t-butylbenzenesulfonate, t-butyl p-t-butylbenzenesulfonate, phenyl p-t-butylbenzene-sulfonate, methyl m-toluenesulfonate, ethyl m-toluenesulfonate, butyl m-toluenesulfonate, hexyl m-toluenesulfonate, t-butyl m-toluenesulfonate, phenyl m-toluenesulfonate, methyl m-ethylbenzenesulfonate, ethyl m-ethylbenzenesulfonate, butyl m-ethylbenzenesulfonate, hexyl m-ethylbenzenesulfonate, t-butyl m-ethylbenzenesulfonate, phenyl m-ethylbenzene-sulfonate, methyl m-t-butylbenzenesulfonate, ethyl m-t-butyl-benzenesulfonate, butyl m-t-butylbenzenesulfonate, hexyl m-t-butylbenzenesulfonate, t-butyl m-t-butylbenzenesulfonate, phenyl m-t-butylbenzenesulfonate, methyl 1-naphthalene-sulfonate, ethyl 1-naphthalenesulfonate, butyl 1-naphthalene-sulfonate, hexyl 1-naphthalenesulfonate, t-butyl 1-naphthalene-sulfonate and phenyl 1-naphthalenesulfonate. Examples of the aliphatic sulfonic ester include methyl cyclohexylsulfonate, ethyl cyclohexylsulfonate, butyl cyclohexylsulfonate, hexyl cyclohexylsulfonate, t-butyl cyclohexylsulfonate, phenyl cyclohexylsulfonate, methyl cyclopentylsulfonate, ethyl cyclopentylsulfonate, butyl cyclopentylsulfonate, hexyl cyclopentylsulfonate, t-butyl cyclopentylsulfonate, phenyl cyclopentylsulfonate, methyl isobutylsulfonate, ethyl isobutylsulfonate, butyl isobutylsulfonate, hexyl isobutylsulfonate, cyclohexyl isobutylsulfonate, t-butyl isobutylsulfonate, phenyl isobutylsulfonate, methyl t-butylsulfonate, ethyl t-butylsulfonate, butyl t-butyl-sulfonate, hexyl t-butylsulfonate, t-butyl t-butylsulfonate, phenyl t-butylsulfonate, methyl t-amylsulfonate, ethyl t-amylsulfonate, butyl t-amylsulfonate, hexyl t-amylsulfonate, t-butyl t-amylsulfonate and phenyl t-amylsulfonate.

Of these, those sulfonic ester compounds in which R¹ is an aromatic hydrocarbon group having 6 to 10 carbon atoms, and R² is a branched aliphatic hydrocarbon group having 3 to 8 carbon atoms, branched at the carbon atom at the alpha-position, or an alicyclic hydrocarbon group having 5 to 10 carbon atoms are preferred.

Specific examples of the sulfonic ester compound which is preferably used in the present invention are as follows:

Specific examples of the aromatic sulfonic ester include (a) alkyl aromatic sulfonates, for instance, isopropyl benzenesulfonate, sec-butyl benzenesulfonate, tert-butyl benzenesulfonate, tert-amyl benzenesulfonate, isopropyl p-toluenesulfonate, sec-butyl p-toluenesulfonate, tert-butyl p-toluenesulfonate, tert-amyl p-toluenesulfonate, isopropyl p-ethylbenzenesulfonate, sec-butyl p-ethylbenzenesulfonate, tert-butyl p-ethylbenzenesulfonate, tert-amyl p-ethylbenzenesulfonate, isopropyl p-tert-butylbenzenesulfonate, sec-butyl p-tert-butylbenzenesulfonate, tert-butyl p-tert-butylbenzenesulfonate, tert-amyl p-tert-butylbenzenesulfonate, isopropyl m-toluenesulfonate, sec-butyl m-toluenesulfonate, tert-butyl m-toluenesulfonate, tert-amyl m-toluenesulfonate, isopropyl m-ethylbenzenesulfonate, sec-butyl m-ethylbenzenesulfonate, tert-butyl m-ethylbenzenesulfonate, tert-amyl m-ethylbenzenesulfonate, isopropyl m-tert-butylbenzenesulfonate, sec-butyl m-tert-butylbenzenesulfonate, tert-butyl m-tert-butylbenzenesulfonate, tert-amyl m-tert-butylbenzenesulfonate, isopropyl 1-naphthalenesulfonate, sec-butyl 1-naphthalenesulfonate, tert-butyl 1-naphthalenesulfonate and tert-amyl 1-naphthalenesulfonate; and
(b) cycloalkyl aromatic sulfonates, for instance, cyclopentyl benzenesulfonate, cyclohexyl benzenesulfonate, norbornyl benzenesulfonate, cyclopentyl p-toluenesulfonate, cyclohexyl p-toluenesulfonate, norbornyl p-toluenesulfonate, cyclopentyl p-ethylbenzenesulfonate, cyclohexyl p-ethylbenzenesulfonate, norbornyl p-ethylbenzenesulfonate, cyclopentyl p-tert-butylbenzenesulfonate, cyclohexyl p-tert-butylbenzenesulfonate, norbornyl p-tert-butylbenzenesulfonate, cyclopentyl m-toluenesulfonate, cyclohexyl m-toluenesulfonate, norbornyl m-toluenesulfonate, cyclopentyl m-ethylbenzenesulfonate, cyclohexyl m-ethylbenzenesulfonate, norbornyl m-ethylbenzenesulfonate, cyclopentyl m-tert-butylbenzenesulfonate, cyclohexyl m-tert-butylbenzenesulfonate, norbornyl m-tert-butylbenzenesulfonate, cyclopentyl 1-naphthalenesulfonate, cyclohexyl 1-naphthalenesulfonate and norbornyl 1-naphthalenesulfonate.

Specific examples of the aliphatic sulfonic ester include (c) alkyl aliphatic sulfonates, for instance, isopropyl cyclohexylsulfonate, sec-butyl cyclohexylsulfonate, tert-butyl cyclohexylsulfonate, tert-amyl cyclohexylsulfonate, isopropyl cyclopentylsulfonate, sec-butyl cyclopentylsulfonate, tert-butyl cyclopentylsulfonate, tert-amyl cyclopentylsulfonate, isopropyl isobutylsulfonate, sec-butyl isobutylsulfonate, tert-butyl isobutylsulfonate, tert-amyl isobutylsulfonate, isopropyl tert-butylsulfonate, sec-butyl tert-butylsulfonate, tert-butyl tert-butylsulfonate, tert-amyl tert-butylsulfonate, isopropyl tert-amylsulfonate, sec-butyl tert-amylsulfonate, tert-butyl tert-amylsulfonate and tert-amyl tert-amylsulfonate; and
(d) aliphatic cycloalkyl sulfonates, for instance, cyclopentyl cyclohexylsulfonate, cyclohexyl cyclohexylsulfonate, norbornyl cyclohexylsulfonate, cyclopentyl cyclopentylsulfonate, cyclohexyl cyclopentylsulfonate, norbornyl cyclopentylsulfonate, cyclopentyl isobutylsulfonate, cyclohexyl isobutylsulfonate, norbornyl isobutylsulfonate, cyclopentyl tert-butylsulfonate, cyclohexyl tert-butylsulfonate, norbornyl tert-butylsulfonate, cyclopentyl tert-amylsulfonate, cyclohexyl tert-amylsulfonate and norbornyl tert-amylsulfonate.

### <Production of Component (A)>

The components constituting the above Component (A) can be brought into contact with each other under any conditions as long as the resulting catalyst can show the effects of the present invention, provided that they are needed to be brought into contact in the absence of oxygen. However, the following conditions are, in general, preferred. The temperature at which the components are brought into contact is approximately -50 to 200°C, preferably 0 to 100°C. As the method for bringing the components into contact with each other, a mechanical method using a rotary ball mill, an oscillating mill, a jet mill, a medium-agitating grinder or the like, or a method in which the components are brought into contact under stirring in the presence of an inert diluent can be employed. Examples of the inert diluent for use in the latter method include aliphatic hydrocarbons, aromatic hydrocarbons, halohydrocarbons and polysiloxanes.

The components constituting the Component (A) can be used in any ratio as long as the final catalyst can show the effects of the present invention. However, it is preferable that the ratio of the components be in the following range. The amount of the titanium compound used is such that the molar ratio of the titanium compound to the magnesium compound used is preferably in the range of 0.0001 to 1,000, more preferably 0.01 to 10. In the case where a compound which can be the source of a halogen is employed, the amount of this compound is normally such that the molar ratio of this compound to the magnesium compound used is preferably in the range of 0.01 to 1,000, more preferably 0.1 to 100, irrespective of whether the titanium and/or magnesium compound contains halogen or not. The organic acid ester compound, organic acid halide compound or ether compound of the component (A2) is normally used in such an amount that the molar ratio of the component (A2) to the titanium component constituting the component (A1) will be in the range of 0.001 to 1,000, preferably 0.01 to 100 (when a plurality of the compounds are used as the component (A2), this range is applied to the sum of the amounts of the compounds used). The amount of the silicon compound when used as component (A2) in Aspect II is normally such that the atomic ratio of the silicon of the compound to the titanium in the component (A1), viz. Si/Ti, is 0.01 to 1,000, preferably 0.1 to 100. The sulfonic ester compound of the component (A3) is normally used in such an amount that the molar ratio of this compound to the titanium component constituting the component (A1) will be in the range of 0.001 to 1,000, preferably 0.01 to 1,000.

The Component (A) is prepared by bringing the components (A1), (A2) and (A3), and, when necessary, other components such as an electron donor into contact with each other, for example, by one of the following production processes:
(a) A process in which a magnesium halide (and, when necessary, an electron donor), a titanium-containing compound, an organic acid ester compound and/or organic acid halide compound and/or ether compuond and/or organosilicon compound (A2), and a sulfonic ester compound are brought into contact with each other.
(b) A process in which a magnesium halide, an electron donor, an organic acid ester compound and/or organic acid halide compound and/or ether compound and/or organosilicon compound (A2), a halogen-containing titanium compound and a sulfonic acid ester compound are brought into contact with alumina or magnesia that has been treated with a phosphorus halide compound.
(c) A process in which a titanium and/or silicon halogen compound is brought into contact with a solid component obtained by bringing a magnesium halide, a titanium tetraalkoxide and a specific polymeric silicon compound into contact with each other, thereby obtaining a reaction product, and this product is washed with an inert organic solvent, and then brought into contact with an organic acid ester compound and/or organic acid halide compound and/or ether compound and/or organosilicon compound (A2) and a sulfonic ester compound either at the same time or separately.
   A compound represented by the following formula is suitable as the polymeric silicon compound: 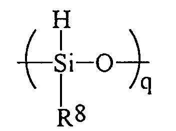 wherein R⁸ represents a hydrocarbon group having approximately 1 to 10 carbon atoms, and q represents a polymerization degree at which the viscosity of the polymeric silicon compound can be in the range of 1 to 100 centistokes (1 centistoke = 10⁻⁶m².s⁻¹). Specifically, methyl hydrogen polysiloxane, ethyl hydrogen polysiloxane, phenyl hydrogen polysiloxane, cyclohexyl hydrogen polysiloxane, 1,3,5,7-tetramethylcyclotetrasiloxane, 1,3,5,7,9-pentamethylcyclopentasiloxane or the like is preferable as the polymeric silicon compound.
(d) A process in which a magnesium compound is dissolved by a titanium tetraalkoxide and/or electron donor, a solid component is separated out from this solution by using a halogenating agent or titanium halogen compound, and then an organic acid ester compound and/or organic acid halide compound and/or ether compound and/or organosilicon compound (A2), a titanium compound and a sulfonic ester compound are brought into contact with this solid component either at the same time or separately.
(e) A process in which after an organomagnesium compound such as a Grignard reagent is allowed to react with a halogenating or reducing agent or the like, an electron donor is, when necessary, brought into contact with this, and then an organic acid ester compound and/or organic acid halide compound and/or organic acid halide compound and/or ether compound and/or organosilicon compound (A2), a titanium compound and a sulfonic ester compound are brought into contact with the reaction product either at the same time or separately.
(f) A process in which a halogenating agent and/or titanium compound, an organic acid ester compound and/or organic acid halide compound and/or organic acid halide compound and/or ether compound and/or organosilicon compound (A2), and a sulfonic ester compound are brought into contact with an alkoxy magnesium compound in the presence or absence of an electron donor either at the same time or separately.

In the above-described production processes, the processes (a), (c), (d) and (f) are preferred. The component (A) can be washed, in the course and/or at the end of the production thereof, with an inert organic solvent such as an aliphatic or aromatic hydrocarbon solvent (e.g., hexane, heptane, toluene, and cyclohexane), or a halogenated hydrocarbon solvent (e.g., n-butyl chloride, 1,2-dichloroethylene, carbon tetrachloride and chlorobenzene)

The Component (A) for use in the present invention can be one which has been subjected to a preliminary polymerization process comprising bringing the above-obtained solid catalyst component into contact with a compound having a carbon-carbon unsaturated bond such as an olefin, diene or styrene, thereby polymerizing the compound. Examples of the olefin used for the preliminary polymerization include olefins having approximately 2 to 20 carbon atoms, specifically ethylene, propylene, 1-butene, 3-methylbutene-1, 1-pentene, 1-hexene, 4-methylpentene-1, 1-octene, 1-decene, 1-undecene and 1-eicosene. Specific examples of the diene used for the preliminary polymerization include 1,3-butadiene, isoprene, 1,4-hexadiene, 1,5-hexadiene, 1,3-pentadiene, 1,4-pentadiene, 2,4-pentadiene, 2,6-octadiene, cis-2,-trans-4-hexadiene, trans-2,trans-4-hexadiene, 1,3-heptadiene, 1,4-heptadiene, 1,5-heptadiene, 1,6-heptadiene, 2,4-heptadiene, dicyclopentadiene, 1,3-cyclohexadiene, 1,4-cyclohexadiene, cyclopentadiene, 1,3-cycloheptadiene, 4-methyl-1,4-hexadiene, 5-methyl-1,4-hexadiene, 1,9-decadiene, 1,13-tetradecadiene, p-divinylbenzene, m-divinylbenzene, o-divinylbenzene and dicyclopentadiene. Specific examples of the styrene used for the prepolymerization include styrene, alpha-methylstyrene, allylbenzene and chlorostyrene.

The above-enumerated unsaturated compounds can be polymerized at the preliminary polymerization by the use of the Component (A) and, optionally, an organoaluminum compound, which will be described later.

The reaction between the titanium component and the above-described compound at the preliminary polymerization can be carried out under any conditions as long as the final catalyst can show the effects of the present invention. However, the following conditions are generally preferred. The amount of the compound containing a carbon-carbon unsaturated bond preliminary polymerized is from 0.001 to 100 g, preferably from 0.1 to 50 g, more preferably from 0.5 to 10 g per 1 g of the solid titanium component. The preliminary polymerization temperature is from -150 to 150°C, preferably from 0 to 100°C. It is noted that the prepolymerization temperature is preferably lower than the temperature for "main polymerization", that is, the polymerization of an alpha-olefin. It is generally preferable to carry out the reaction under stirring. The reaction can also be carried out in the presence of an inert solvent such as n-hexane or n-heptane.

The solid catalyst Component (A) obtained can be used for the polymerization of an alpha-olefin either in the state of being moistened with a solvent, or as a slurry of the solid catalyst component dispersed in a solvent. Alternatively, the solid catalyst component can be used for the polymerization after it is dried and made into a powder.

### (2) Organoaluminum Compound Component/Component (B)

The component (B) is an organoaluminum compound. Preferable examples of the organoaluminum compound for use in the present invention include those organoaluminum compounds which are represented by the formula R⁹₃₋ᵣAlXᵣ or R¹⁰₃₋ₛAl(OR¹¹)ₛ, wherein R⁹ and R¹⁰ represent a hydrocarbon group having 1 to 20 carbon atoms or hydrogen atom, R¹¹ represents a hydrocarbon group, preferably a hydrocarbon group having 1 to 20 carbon atoms, X is a halogen, r is a number of 0 or more and less than 3, and s is a number more than 0 but less than 3. Specific examples of such an organoaluminum compound include (a) trialkylaluminums such as trimethylaluminum, triethylaluminum, triisobutylaluminum, trihexylaluminum, trioctylaluminum and tridecylaluminum; (b) alkylaluminum halides such as diethylaluminum monochloride, diisobutylaluminum monochloride, ethylaluminum sesquichloride and ethylaluminum dichloride; (c) alkylaluminum hydrides such as diethylaluminum hydride and diisobutylaluminum hydride; and (d) alkylaluminum alkoxides such as diethylaluminum ethoxide and diethylaluminum phenoxide.

In addition to these organoaluminum compounds (a) to (d), other organometallic compounds, for instance, those alkylaluminum alkoxides which are represented by the formula R¹²₃₋ₜAl(OR¹³)ₜ, in which R¹² and R¹³, which may be the same or different, are a hydrocarbon group having 1 to 20 carbon atoms, and t is a number of larger than 0 and 3 or smaller can be co-employed. For instance, there can be mentioned the combination use of triethylaluminum and diethylaluminum ethoxide, that of diethylaluminum monochloride and diethylaluminum ethoxide, that of ethylaluminum dichloride and ethylaluminum diethoxide, and that of triethylaluminum and diethylaluminum ethoxide and diethylaluminum monochloride. The organoaluminum compound is used in such an amount that the molar ratio of aluminum contained in the organoaluminum compound to the titanium component contained in the solid catalyst component, Al/Ti, will be generally from 1 to 1,000, preferably from 10 to 500.

### (3) Silicon Compound/Component (C) in Aspect I or component (A2) in Aspect II

The organosilicon compound for use in the present invention is one represented by the general formula R³R⁴₃₋ₙSi(OR⁵)ₙ, wherein R³ and R⁴, which may be the same or different, represent a hydrocarbon group or an alkoxy group, R⁵ is a hydrocarbon group, and n is a number of 1 to 3. The silicon compound can be a mixture of a plurality of the silicon compounds represented by the above formula. In the above formula, R³ is preferably a branched or alicyclic hydrocarbon group. In the case where R³ is a branched hydrocarbon group, a hydrocarbon group which is branched at the carbon atom next to the silicon atom is preferred. In this case, the branch group is preferably an alkyl group, a cycloalkyl group, or an aryl group (for example, a phenyl group or methyl-substituted phenyl group). More preferable R³ is a hydrocarbon group in which the carbon atom next to the silicon atom, that is, the alpha-positioned carbon atom is secondary or tertiary carbon atom. In particular, a hydrocarbon group in which the carbon atom bound to the silicon atom is tertiary is preferred. In the case where R³ is a branched hydrocarbon group, the number of carbon atoms is generally from 3 to 20, preferably from 4 to 10. When R³ is an alicyclic hydrocarbon group, the number of carbon atoms is generally from 4 to 20, preferably from 5 to 10. R⁴ is preferably a hydrocarbon or alkoxy group having 1 to 20, preferably 1 to 10 carbon atoms, which may be the same or different from R³. R⁵ is a hydrocarbon group having 1 to 20, preferably 1 to 10 carbon atoms. Preferably, n is a number from 2 to 3.

Specific examples of the silicon compound which can be used in the present invention are as follows: (CH₃)₃CSi(CH₃)(OCH₃)₂, (CH₃)₃CSi(CH(CH₃)₂)(OCH₃)₂, (CH₃)₃CSi(CH₃)(OC₂H₅)₂, (CH₃)₃CSi(C₂H₅)(OCH₃)₂, (CH₃)₃CSi(n-C₃H₇)(OCH₃)₂, (CH₃)₃CSi(n-C₆H₁₃)(OCH₃)₂, (C₂H₅)₃CSi(CH₃)(OCH₃)₂, (CH₃)(C₂H₅)CHSi(CH₃)(OCH₃)₂, ((CH₃)₂CHCH₂)₂Si(OCH₃)₂, (C₂H₅)(CH₃)₂CSi(CH₃)(OCH₃)₂, (C₂H₅)(CH₃)₂CSi(CH₃)(OC₂H₅)₂, (CH₃)₃CSi(OCH₃)₃, (CH₃)₃CSi(OC₂H₅)₃, (CH₃)(C₂H₅)₃CHSi(OCH₃)₃, (CH₃)₂CH(CH₃)₂CSi(CH₃)(OCH₃)₂, ((CH₃)₃C)₂Si(OCH₃)₂, (C₂H₅)(CH₃)₂CSi(OCH₃)₃, (C₂H₅)(CH₃)₂CSi(OC₂H₅)₃, (CH₃)₃CSi(OC(CH₃)₃)(OCH₃)₂, ((CH₃)₂CH)₂Si(OCH₃)₂, ((CH₃)₂CH)₂Si(OC₂H₅)₂, (C₅H₉)₂Si(OCH₃)₂, (C₅H₉)₂Si(OC₂H₅)₂, (C₅H₉)(CH₃)Si(OCH₃)₂, (C₅H₉)((CH₃)₂CHCH₂)Si(OCH₃)₂, (C₆H₁₁)Si(CH₃)(OCH₃)₂, (C₆H₁₁)₂Si(OCH₃)₂, (C₆H₁₁)((CH₃)₂CHCH₂)Si(OCH₃)₂, ((CH₃)₂CHCH₂)((C₂H₅)(CH₃)CH)Si(OCH₃)₂, ((CH₃)₂CHCH₂)((CH₃)₂CH)Si(OC₅H₁₁)₂, HC(CH₃)₂C(CH₃)₂Si(CH₃)(OCH₃)₂, HC(CH₃)₂C(CH₃)₂Si(CH₃)(OC₂H₅)₂, HC(CH₃)₂C(CH₃)₂Si(OCH₃)₃, HC(CH₃)₂C(CH₃)₂Si(OC₂H₅)₃, 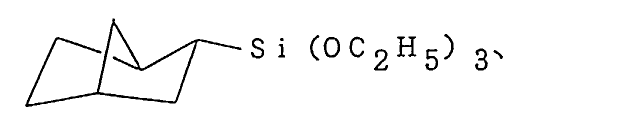 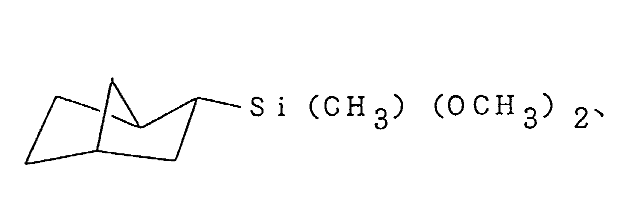 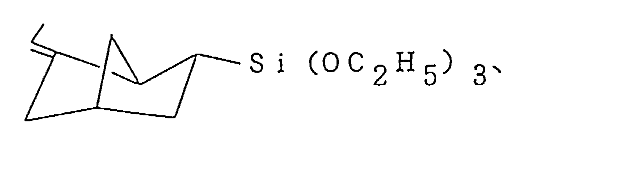 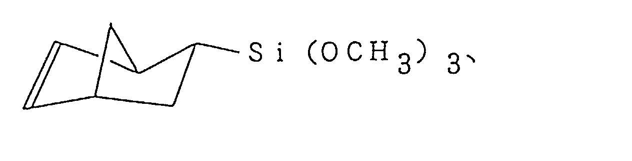 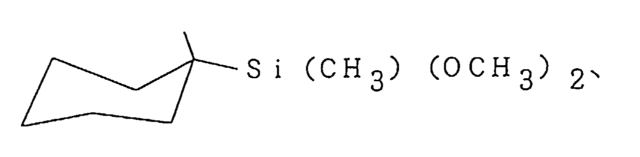 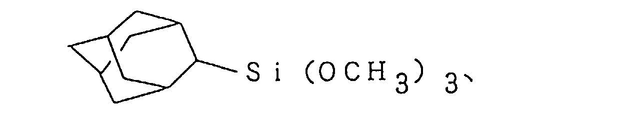 (CH₃)₃CSi(OCH(CH₃)₂)(OCH₃)₂ and (CH₃)₃CSi(OC(CH₃)₃)(OCH₃)₂.

The silicon compound can be used in any amount as long as the final catalyst can show the effects of the present invention. In general, however, it is used as Component (C) in such an amount that the molar ratio of the silicon compound to the organoaluminum compound (component (B)) will be in the range of 0.01 to 10, preferably in the range of 0.05 to 1, and as component (A2) in an amount described hereinbefore.

Other electron donor can also be added as an external donor along with the external donor such as the silicon compound as Component (C). Examples of the electron donor include oxygen-containing electron donors such as alcohols, phenols, ketones, aldehydes, carboxylic acids, organic or inorganic acid esters, ethers, acid amides and acid anhydrides, and nitrogen-containing electron donors such as ammonia, amines and nitriles.

### <Use of the Catalyst/Polymerization of Alpha-Olefin>

The polymerization of an alpha-olefin according to the present invention is applied to slurry polymerization using a hydrocarbon solvent, liquid-phase solvent-free polymerization using substantially no solvent, or gas phase polymerization. In the case of slurry polymerization, a hydrocarbon solvent such as heptane, hexane, heptane or cyclohexane can be used as the polymerization solvent. The polymerization can be carried out by any method, for instance, by means of continuous polymerization, batch-wise polymerization or multi-stage polymerization. The polymerization temperature is, in general, approximately 30 to 200°C, preferably 50 to 150°C. Hydrogen can be used as a molecular-weight modifier.

Alpha-olefins to be polymerized by the use of the catalyst system of the present invention are those represented by the general formula R¹⁴-CH=CH₂, wherein R¹⁴ is a hydrocarbon group which contains 1 to 20 carbon atoms and which may have a branch group. Specific examples of such alpha-olefins include propylene, butene-1, pentene-1, hexene-1, and 4-methyl-pentene-1. By the use of the catalyst system of the present invention, there can be carried out not only the homopolymerization of these alpha-olefins but also the copolymerization of the alpha-olefin and a monomer copolymerizable therewith, for instance, a monomer selected from ethylene, alpha-olefins, dienes and styrenes. When the copolymerization is carried out, the copolymerizable monomer can be used in an amount of 15% by weight or less in the case of random copolymerization, and in an amount of 50% by weight or less in the case of block copolymerization.

### EXAMPLES

The present invention will now be explained more specifically by referring to the following examples. However, these examples are not intended to limit or restrict the present invention in any way.

### Example I-1

### [Preparation of Component (A)]

To a flask thoroughly purged with nitrogen was introduced 200 ml of n-heptane which had been subjected to dehydration and deoxygenation. To this were then introduced 0.4 mol of MgCl₂ and 0.8 mol of Ti(O-nC₄H₉)₄, and they were allowed to react with each other at 95°C for 2 hours. After the reaction, the reaction mixture was cooled to 40°C. Subsequently, 48 ml of methyl hydropolysiloxane having a viscosity of 20 centistokes was introduced to the reaction mixture, and they were reacted for 3 hours. The solid product produced was washed with n-heptane.

Subsequently, 50 ml of n-heptane purified in the same manner as the above was introduced to a flask which had been thoroughly purged with nitrogen. To this was added the above-synthesized solid product in an amount of 0.24 mol calculated in terms of Mg atom. A mixture of 25 ml of n-heptane and 0.4 mol of SiCl₄ was then introduced to the flask at 30°C over 30 minutes to cause a reaction. The reaction was carried out at 70°C for 3 hours. After the reaction, the reaction product was washed with n-heptane. A mixture of 25 ml of n-heptane and 0.024 mol of phthaloyl chloride was introduced to the flask at 70°C over 30 minutes, and allowed to react with the above product at 90°C for one hour. After the reaction, the reaction product was washed with n-heptane. A mixture of 25 ml of n-heptane and 0.18 mol of ethyl p-toluenesulfonate was then introduced to the flask at 70°C over 30 minutes, and allowed to react with the above reaction product at 90°C for 1 hour. After the reaction, the reaction product was washed with n-heptane. Subsequently, 10 ml of SiCl₄ was introduced to the flask, and allowed to react with the product at 80°C for 6 hours. After the reaction, the reaction product was thoroughly washed with n-heptane, thereby finally obtaining a solid catalyst component, the Component (A), containing as a main component magnesium chloride. The Ti content of this solid component was found to be 1.2% by weight.

### [Polymerization of Propylene]

To a 1.5 litre stainless steel autoclave equipped with a stirrer and a thermal control unit were introduced 500 ml of n-heptane which had been thoroughly dehydrated and deoxygenated, 100 mg of triethylaluminum, the Component (B), 33.0 mg of (C₆H₁₁)Si(CH₃)(OCH₃)₂, the Component (C), and 15 mg of the above-prepared Component (A). To this was then introduced 60 ml of hydrogen, and the temperature and pressure were raised to polymerize propylene at a temperature of 75°C under a pressure of 5 kg/cm²G (1 kg cm² G = 0.981 bar Gauge) for 2 hours. After the polymerization, the polymer slurry obtained was filtered, and the product separated was dried to obtain 90.5 g of a polymer. From the filtrate, another crop of 0.6 g of the polymer was obtained. The polymer obtained was found to have an MFR of 20 g/10 min, a density of 0.9083 g/cc (1 g/cc = 1 g/cm³), and a bulk density of 0.47 g/cc. The Q value (Mw/Mn) determined by means of GPC was 4.8.

### Example I-2

The procedure of Example I-1 was repeated except that ethyl benzenesulfonate was used, instead of the ethyl p-toluene-sulfonate, as the component (A3) in the preparation of the Component (A) and that 40.0 mg of (C₅H₉)₂Si(OCH₃)₂ was used, instead of the (C₆H₁₁)Si(CH₃)(OCH₃)₂, as the Component (C) in the polymerization of propylene, thereby polymerizing propylene. As a result, 95.3 g of a polymer was obtained. From the filtrate, another crop of 0.5 g of the polymer was obtained. The polymer obtained was found to have an MFR of 19 g/10 min, a density of 0.9090 g/cc, and a bulk density of 0.49 g/cc. The Q value (Mw/Mn) determined by means of GPC was 4.9.

### Example I-3

### [Preparation of Component (A)]

To a flask thoroughly purged with nitrogen was introduced 100 ml of toluene which had been dehydrated and dehydrogenated. 10 g of Mg(OEt)₂ was then introduced to and suspended in the toluene. Subsequently, 20 ml of TiCl₄ was introduced to this, and the temperature of the mixture was raised to 90°C. 2.5 ml of di-n-butyl phthalate was then added to the mixture, and the temperature of the resultant was further raised to 110°C to cause a reaction. The reaction was carried out at the temperature for 3 hours. After the reaction, the reaction product was washed with toluene. 20 ml of TiCl₄, 2.4 g of ethyl p-toluenesulfonate and 100 ml of toluene were introduced to the product, and they were reacted at 110°C for 2 hours. After the reaction, the reaction product was thoroughly washed with n-heptane to obtain a solid catalyst component, the Component (A). The titanium content of this catalyst component was found to be 2.6% by weight.

### [Polymerization of Propylene]

Propylene was polymerized under the same polymerization conditions as in Example I-1. As a result, 90.0 g of a polymer was obtained. From the filtrate, another crop of 0.5 g of the polymer was obtained. The polymer obtained was found to have an MFR of 22 g/10 min, a density of 0.9088 g/cc, and a bulk density of 0.49 g/cc. The Q value (Mw/Mn) determined by means of GPC was 4.8.

### Comparative Example I-1

The procedure of Example I-1 was repeated except that the ethyl p-toluenesulfonate, the component (A3), was not used in the preparation of the Component (A), thereby carrying out the polymerization of propylene. As a result, 114.5 g of a polymer was obtained. From the filtrate, another crop of 1.0 g of the polymer was obtained. The polymer obtained was found to have an MFR of 21 g/10 min, a density of 0.9060 g/cc, and a bulk density of 0.45 g/cc. The Q value (Mw/Mn) determined by means of GPC was 4.4.

### Comparative Example I-2

### [Preparation of Component (A)]

To a flask thoroughly purged with nitrogen was introduced 200 ml of n-heptane which had been subjected to dehydration and dehydrogenation. To this were introduced 0.4 mol of MgCl₂ and 0.8 mol of Ti(O-nC₄H₉)₄, and they were allowed to react with each other at 95°C for 2 hours. After the reaction, the reaction mixture was cooled to 40°C. To this was then introduced 48 ml of methyl hydropolysiloxane having a viscosity of 20 centistokes, and the reaction was continued for 3 hours. The solid product produced was washed with n-heptane.

Subsequently, 50 ml of n-heptane purified in the same manner as the above was introduced to a flask thoroughly purged with nitrogen. To this was introduced the above-synthesized solid product in an amount of 0.24 mol calculated in terms of Mg atom. A mixture of 25 ml of n-heptane, 0.4 mol of SiCl₄ and 0.18 mol of ethyl p-toluenesulfonate was then introduced to the flask at 30°C over 30 minutes to cause a reaction. The reaction was carried out at 70°C for 3 hours. After the reaction, the reaction product was washed with n-heptane. 30 ml of TiCl₄ was introduced to the product, and they were reacted at 90°C for 3 hours. After the reaction, the supernatant liquid was removed, and the resultant was brought into contact with TiCl₄ again under the same conditions as the above. After the reaction, the reaction product was thoroughly washed with n-heptane to obtain a solid catalyst component, the Component (A). The titanium content of this catalyst component was found to be 4.5% by weight.

### [Polymerization of Propylene]

Propylene was polymerized under the same polymerization conditions as in Example I-1. As a result, 91.0 g of a polymer was obtained. From the filtrate, another crop of 1.2 g of the polymer was obtained. The polymer obtained was found to have an MFR of 24 g/10 min, a density of 0.9062 g/cc, and a bulk density of 0.44 g/cc. The Q value (Mw/Mn) determined by means of GPC was 4.5

The results obtained are set forth in Table I-1.

**Table 1**

| | Yield (g) | Atactic (g) | MFR (g/10min) | Density (g/cc) | B.D. (g/cc) | Q Value | Flexural Modulus (kg/cm²) |
|---|---|---|---|---|---|---|---|
| Example I-1 | 90.5 | 0.6 | 20 | 0.9083 | 0.47 | 4.8 | 14700 |
| Example I-2 | 95.3 | 0.5 | 19 | 0.9090 | 0.49 | 4.9 | 15400 |
| Example I-3 | 90.2 | 0.5 | 22 | 0.9088 | 0.49 | 4.8 | 15200 |
| Comparative Example I-1 | 114.5 | 1.0 | 21 | 0.9060 | 0.45 | 4.4 | 12700 |
| Comparative Example I-2 | 91.0 | 1.2 | 24 | 0.9062 | 0.44 | 4.5 | 12900 |

### Example I-4

A 200 litre stirring-type autoclave was thoroughly purged with propylene. Thereafter, 45 litre of purified n-heptane was introduced to the autoclave, to which 10.5 g of triethylaluminum (B), 3.5 g of (C₆H₁₁)Si(CH₃)(OCH₃)₂ (C) and 6.5 g of the solid catalyst component prepared in Example I-1 (A) were introduced at 70°C under propylene atmosphere. A first-step polymerization was initiated so that the temperature of the autoclave was raised to 75°C, and propylene was introduced to the autoclave at a feed rate of 9.0 kg/hour, with a hydrogen concentration being kept at 7.0 vol%. After 220 minutes, the introduction of propylene was stopped. The internal pressure of the autoclave at this time was 6.0 kg/cm²G. The polymerization was further continued at 75°C for 90 minutes. Thereafter, the propylene in the gas phase was purged until the pressure of the autoclave became 0.2 kg/cm²G. Next, after the temperature of the autoclave was lowered to 65°C, propylene and ethylene were introduced to the autoclave at feed rates of 1.13 kg/hour and 2.63 kg/hour, respectively, for a period of 79 minutes, thereby carrying out a second-step polymerization for further 30 minutes. The slurry obtained was filtered, and the product separated was dried to obtain 32.7 kg of a powdery block copolymer. The block copolymer was found to have an MFR of 24 g/10 min, a flexural modulus of 14,000 kg/cm², and an izod impact strength (23°C) of 7.2 kg•cm/cm².

### Comparative Example I-3

The procedure of Example I-4 was repeated except that 6.5 g of the solid catalyst component prepared in Comparative Example I-1 was used instead of the solid catalyst component used in Example I-4, thereby obtaining a block copolymer. As a result, 32.8 kg of a powdery block copolymer was obtained. The block copolymer thus obtained was found to have an MFR of 21 g /10 min, a flexural modulus of 13,100 kg/cm² and an izod impact strength (23°C) of 7.1 kg•cm/cm².

### Example I-5

### [Preparation of Component (A)]

Component (A) was prepared in the same manner as in Example I-1, provided that isopropyl p-toluenesulfonate was used instead of the ethyl p-toluenesulfonate. The titanium content of the Component (A) obtained was 1.2% by weight.

### [Polymerization of Propylene]

Propylene was polymerized in the same manner as in Example I-1, provided that the above-obtained Component (A) was used instead of the Component (A) used in Example I-1. As a result, 91.0 g of a polymer was obtained. From the filtrate, another crop of 0.7 g of the polymer was obtained. The polymer obtained was found to have an MFR of 21 g/10 min, a density of 0.9086 g/cc and a bulk density of 0.48 g/cc. The Q value (Mw/Mn) determined by means of GPC was 4.9.

### Example I-6

The procedure of Example I-5 was repeated except that sec-butyl benzenesulfonate was used, instead of the isopropyl p-toluenesulfonate, as the component (A3) in the preparation of the Component (A) and that 40.0 mg of (C₅H₉)₂Si(OCH₃)₂ was used, instead of the (C₆H₁₁)Si(CH₃)(OCH₃)₂, as the Component (C) in the polymerization of propylene, thereby polymerizing propylene. As a result, 98.6 g of a polymer was obtained. From the filtrate, another crop of 0.4 g of the polymer was obtained. The polymer obtained was found to have an MFR of 20 g/10 min, a density of 0.9092 g/cc and a bulk density of 0.49 g/cc. The Q value (Mw/Mn) determined by means of GPC was 4.9.

### Example I-7

### [Preparation of Component (A)]

Component (A) was prepared in the same manner as in Example I-3, provided that sec-butyl p-toluenesulfonate was used instead of the ethyl p-toluenesulfonate. The titanium content of the Component (A) thus obtained was 2.6% by weight.

### [Polymerization of Propylene]

Propylene was polymerized under the same conditions as in Example I-3. As a result, 91.3 g of a polymer was obtained. From the filtrate, another crop of 0.6 g of the polymer was obtained. The polymer obtained was found to have an MFR of 21 g/10 min, a density of 0.9091 g/cc and a bulk density of 0.49 g/cc. The Q value (Mw/Mn) determined by means of GPC was 4.8.

### Example I-8 (outside the scope of the invention)

The procedure of Example I-4 was repeated except that the same Component (A) as was used in Example I-5 was used instead of the Component (A) used in Example I-4, thereby carrying out the first- and second-step polymerization. The slurry obtained was filtered, and the product separated was dried to obtain 32.9 kg of a powdery block copolymer. The block copolymer obtained was found to have an MFR of 25 g/10 min, a flexural modulus of 14,300 kg/cm² and an izod impact strength (23°C) of 7.3 kg•cm/cm².

### Example I-9

The procedure of Example I-1 was repeated except that ethyl cellosolve acetate was used, instead of the phthaloyl chloride, as the component (A2) in the preparation of the Component (A), thereby polymerizing propylene. As a result, 89.8 g of a polymer was obtained. From the filtrate, another crop of 0.8 g of the polymer was obtained. The polymer obtained was found to have an MFR of 22 g/10 min, a density of 0.9079 g/cc and a bulk density of 0.46 g/cc. The Q value (Mw/Mn) determined by means of GPC was 4.7, and the flexural modulus was 14,300 kg/cm².

### Example I-10

The procedure of Example I-1 was repeated except that 2,2-diisopropyl-1,3-dimethoxypropane was used, instead of the phthaloyl chloride, as the component (A2) in the preparation of the Component (A), thereby polymerizing propylene. As a result, 92.0 g of a polymer was obtained. From the filtrate, another crop of 0.4 g of the polymer was obtained. The polymer obtained was found to have an MFR of 20 g/10 min, a density of 0.9080 g/cc and a bulk density of 0.48 g/cc. The Q value (Mw/Mn) determined by means of GPC was 4.6, and the flexural modulus was 14,400 kg/cm².

### Example I-11

The procedure of Example I-3 was repeated except that 2-t-butyl-2-methyl-1,3-dimethoxypropane was used, instead of the di-n-butyl phthalate, as the component (A2) in the preparation of the Component (A), thereby polymerizing propylene. As a result, 92.2 g of a polymer was obtained. From the filtrate, another crop of 0.4 g of the polymer was obtained. The polymer obtained was found to have an MFR of 18 g/10 min, a density of 0.9085 g/cc and a bulk density of 0.48 g/cc. The Q value (Mw/Mn) determined by means of GPC was 4.7, and the flexural modulus was 14,900 kg/cm².

### <Methods for Evaluating Practical Properties>

The practical properties of the polymers obtained in Examples I-4 and I-8 and Comparative Example I-3 were evaluated as follows. The following additives were added to the powdery block copolymers obtained in Examples I-4 and I-8 and Comparative Example I-3, and the mixtures were respectively pelletized by an extruder under the same conditions. The resultants were respectively molded into sheets, each having a thickness of 4 mm, by an injection molding press. The sheets thus obtained were evaluated in terms of the following physical properties.

| | |
|---|---|
| 2,6-tert-butyl phenol | 0.10% by weight |
| "RA 1010" (manufactured by Ciba-Geigy, Ltd.) | 0.05% by weight |
| Calcium stearate | 0.10% by weight |

### Additives: Measurement of Physical Properties:

Physical properties were determined in accordance with the following test methods.
(a) Flexural modulus: ASTM-D790
(b) Izod impact strength (23°C): ASTM-D256 (notched)

### Example II-1

### [Preparation of Component (A)]

To a flask thoroughly purged with nitrogen was introduced 200 ml of n-heptane which had been subjected to dehydration and deoxygenation. To this were then introduced 0.4 mol of MgCl₂ and 0.8 mol of Ti(O-nC₄H₉)₄, and they were allowed to react with each other at 95°C for 2 hours. After the reaction, the reaction mixture was cooled to 40°C. Subsequently, 48 ml of methyl hydropolysiloxane having a viscosity of 20 centistokes was introduced to the reaction mixture, and they were reacted for 3 hours. The solid product produced was washed with n-heptane.

Subsequently, 50 ml of n-heptane purified in the same manner as the above was introduced to a flask which had been thoroughly purged with nitrogen. To this was added the above-synthesized solid product in an amount of 0.24 mol calculated in terms of Mg atom. A mixture of 25 ml of n-heptane and 0.4 mol of SiCl₄ was then introduced to the flask at 30°C over 30 minutes to cause a reaction. The reaction was carried out at 70°C for 3 hours. After the reaction, the reaction product was washed with n-heptane. A mixture of 25 ml of n-heptane and 0.024 mol of phthaloyl chloride was introduced to the flask at 70°C over 30 minutes, and allowed to react with the above product at 90°C for one hour. After the reaction, the reaction product was washed with n-heptane. A mixture of 25 ml of n-heptane and 0.18 mol of ethyl p-toluenesulfonate was then introduced to the flask at 70°C over 30 minutes, and allowed to react with the above reaction product at 90°C for 1 hour. After the reaction, the reaction product was washed with n-heptane. Subsequently, 10 ml of SiCl₄ was introduced to the flask, and allowed to react with the product at 80°C for 6 hours. After the reaction, the reaction product was thoroughly washed with n-heptane, thereby finally obtaining a solid catalyst component, the Component (A), containing as a main component magnesium chloride. The Ti content of this solid component was found to be 1.2% by weight.

To a flask thoroughly purged with nitrogen were introduced 50 ml of n-heptane purified as above followed by 1.2 ml of (t-C₄H₉)(CH₃)Si(OCH₃)₂ and 1.7 g of Al(C₂H₅)₃ to contact with each other at 30°C for 2 hours. After the contact, the product was washed thoroughly to form a Component (A) formed mainly of magnesium chloride, which was found to contain 1.1% by weight of Ti.

### [Polymerization of Propylene]

To a 1.5 litre stainless steel autoclave equipped with a stirrer and a thermal control unit were introduced 500 ml of n-heptane which had been thoroughly dehydrated and deoxygenated, 100 mg of triethylaluminum, the Component (B) and 15 mg of the above-prepared Component (A). To this was then introduced 60 ml of hydrogen, and the temperature and pressure were raised to polymerize propylene at a temperature of 75°C under a pressure of 5 kg/cm²G for 2 hours. After the polymerization, the polymer slurry obtained was filtered, and the product separated was dried to obtain 161.5 g of a polymer. From the filtrate, another crop of 0.4 g of the polymer was obtained. The polymer obtained was found to have an MFR of 22 g/10 min, a density of 0.9099 g/cc, and a bulk density of 0.50 g/cc. The Q value (Mw/Mn) determined by means of GPC was 4.9.

### Example II-2

### [Preparation of Component (A)]

To a flask thoroughly purged with nitrogen was introduced 200 ml of n-heptane which had been subjected to dehydration and deoxygenation. To this were then introduced 0.4 mol of MgCl₂ and 0.8 mol of Ti(O-nC₄H₉)₄, and they were allowed to react with each other at 95°C for 2 hours. After the reaction, the reaction mixture was cooled to 40°C. Subsequently, 48 ml of methyl hydropolysiloxane having a viscosity of 20 centistokes was introduced to the reaction mixture, and they were reacted for 3 hours. The solid product produced was washed with n-heptane.

Subsequently, 50 ml of n-heptane purified in the same manner as the above was introduced to a flask which had been thoroughly purged with nitrogen. To this was added the above-synthesized solid product in an amount of 0.24 mol calculated in terms of Mg atom. A mixture of 25 ml of n-heptane and 0.4 mol of SiCl₄ was then introduced to the flask at 30°C over 30 minutes to cause a reaction. The reaction was carried out at 70°C for 3 hours. After the reaction, the reaction product was washed with n-heptane. A mixture of 25 ml of n-heptane and 0.024 mol of phthaloyl chloride was introduced to the flask at 70°C over 30 minutes, and allowed to react with the above product at 90°C for one hour. After the reaction, the reaction product was washed with n-heptane. Subsequently, 10 ml of SiCl₄ was introduced to the flask, and allowed to react with the product at 80°C for 6 hours. After the reaction, the reaction product was thoroughly washed with n-heptane, thereby obtaining a solid product for producing Component (A). The Ti content of this solid product was found to be 1.2% by weight.

To a flask thoroughly purged with nitrogen was added 50 ml of n-heptane purified as above, followed by 5 g of the solid product prepared as above, 1.2 ml of (t-C₄H₉)(CH₃)Si(OCH₃)₂, 1.7 g of Al(C₂H₅)₃ and 1.2 g of ethyl p-toluenesulfonate, and contacted with each other at 30°C for 2 hours. After the contact, the product obtained was thoroughly washed with n-heptane to form Component (A). Analysis of its portion showed that the Ti-content was 1.0% by weight.

### [Polymerization of Propylene]

Propylene was polymerized under the same polymerization conditions as in Example II-1. As a result, 164.5 g of a polymer was obtained. From the filtrate, another crop of 0.5 g of the polymer was obtained. The polymer obtained was found to have an MFR of 15 g/10 min, a density of 0.9090 g/cc, and a bulk density of 0.51 g/cc. The Q value (Mw/Mn) determined by means of GPC was 4.8.

### Example II-3

The procedure of Example II-2 was repeated except that ethyl benzenesulfonate was used, instead of the ethyl p-toluene-sulfonate, as the component (A3) in the preparation of the Component (A), thereby polymerizing propylene in the same way. As a result, 174.5 g of a polymer was obtained. From the filtrate, another crop of 0.5 g of the polymer was obtained. The polymer obtained was found to have an MFR of 20 g/10 min, a density of 0.9094 g/cc, and a bulk density of 0.50 g/cc. The Q value (Mw/Mn) determined by means of GPC was 4.9.

### Example II-4

### [Preparation of Component (A)]

To a flask thoroughly purged with nitrogen was introduced 100 ml of toluene which had been dehydrated and dehydrogenated. 10 g of Mg(OEt)₂ was then introduced to and suspended in the toluene. Subsequently, 20 ml of TiCl₄ was introduced to this, and the temperature of the mixture was raised to 90°C. 2.5 ml of di-n-butyl phthalate was then added to the mixture, and the temperature of the resultant was further raised to 110°C to cause a reaction. The reaction was carried out at the temperature for 3 hours. After the reaction, the reaction product was washed with toluene. 20 ml of TiCl₄ and 100 ml of toluene were introduced to the product, and they were reacted at 110°C for 2 hours. After the reaction, the reaction product was thoroughly washed with n-heptane to obtain a solid product for producing Component (A). The titanium content of this solid product was found to be 2.6% by weight.

To a flask thoroughly purged with nitrogen was introduced 50 ml of n-heptane purified as above, followed by 5 g of the solid product prepared as above, 1.2 ml of (t-C₄H₉)(CH₃)Si(OCH₃)₂, 1.7 g of Al(C₂H₅)₃ and 1.2 g of ethyl p-toluenesulfonate, and contacted with each other at 30°C for 2 hours. After the contact, the product obtained was thoroughly washed with n-heptane to form Component (A). Analysis of its portion showed that the Ti-content was 1.9% by weight.

### [Polymerization of Propylene]

Propylene was polymerized under the same polymerization conditions as in Example II-1. As a result, 170.5 g of a polymer was obtained. From the filtrate, another crop of 1.0 g of the polymer was obtained. The polymer obtained was found to have an MFR of 21 g/10 min, a density of 0.9093 g/cc, and a bulk density of 0.40 g/cc. The Q value (Mw/Mn) determined by means of GPC was 4.8.

### Comparative Example II-1

The procedure of Example II-1 was repeated except that the ethyl p-toluenesulfonate, the component (A3), was not used in the preparation of the Component (A), thereby carrying out the polymerization of propylene. As a result, 177.7 g of a polymer was obtained. From the filtrate, another crop of 0.8 g of the polymer was obtained. The polymer obtained was found to have an MFR of 14 g/10 min, a density of 0.9075 g/cc, and a bulk density of 0.45 g/cc. The Q value (Mw/Mn) determined by means of GPC was 4.3.

### Comparative Example II-2

The procedure of Example II-1 was repeated except that benzenesulfonic acid was used, instead of the ethyl p-toluene-sulfonate, as the component (A3) in the preparation of the Component (A), thereby polymerizing propylene in the same way. As a result, 38.9 g of a polymer was obtained. From the filtrate, another crop of 0.1 g of the polymer was obtained. The polymer obtained was found to have an MFR of 17 g/10 min, a density of 0.9074 g/cc, and a bulk density of 0.46 g/cc. The Q value (Mw/Mn) determined by means of GPC was 4.4.

### Comparative Example II-3

### [Preparation of Component (A)]

To a flask thoroughly purged with nitrogen was introduced 200 ml of n-heptane which had been subjected to dehydration and dehydrogenation. To this were introduced 0.4 mol of MgCl₂ and 0.8 mol of Ti(O-nC₄H₉)₄, and they were allowed to react with each other at 95°C for 2 hours. After the reaction, the reaction mixture was cooled to 40°C. To this was then introduced 48 ml of methyl hydropolysiloxane having a viscosity of 20 centistokes, and the reaction was continued for 3 hours. The solid product produced was washed with n-heptane.

Subsequently, 50 ml of n-heptane purified in the same manner as the above was introduced to a flask thoroughly purged with nitrogen. To this was introduced the above-synthesized solid product in an amount of 0.24 mol calculated in terms of Mg atom. A mixture of 25 ml of n-heptane, 0.4 mol of SiCl₄ and 0.18 mol of ethyl p-toluenesulfonate was then introduced to the flask at 30°C over 30 minutes to cause a reaction. The reaction was carried out at 70°C for 3 hours. After the reaction, the reaction product was washed with n-heptane. 30 ml of TiCl₄ was introduced to the product, and they were reacted at 90°C for 3 hours. After the reaction, the supernatant liquid was removed, and the resultant was brought into contact with TiCl₄ again under the same conditions as the above. After the reaction, the reaction product was thoroughly washed with n-heptane to obtain a solid product for producing the Component (A). The titanium content of this solid product was found to be 4.5% by weight.

To a flask thoroughly purged with nitrogen was introduced 50 ml of n-heptane, followed by 5 g of the solid product prepared as above, 1.2 ml of (t-C₄H₉)(CH₃)Si(OCH₃)₂ and 1.7 g of Al(C₂H₅)₃ to contact each other at 30°C for 2 hours. After the contact, the product was thoroughly washed with n-heptane to form Component (A). Analysis of its portion showed that the Ti-content was 4.0% by weight.

### [Polymerization of Propylene]

Propylene was polymerized under the same polymerization conditions as in Example II-1. As a result, 90.5 g of a polymer was obtained. From the filtrate, another crop of 1.0 g of the polymer was obtained. The polymer obtained was found to have an MFR of 22 g/10 min, a density of 0.9065 g/cc, and a bulk density of 0.45 g/cc. The Q value (Mw/Mn) determined by means of GPC was 4.5

The results obtained are set forth in Table II-1.

**Table II-1**

| | Yield (g) | Atactic (g) | MFR (g/10min) | Density (g/cc) | B.D. (g/cc) | Q Value | Flexural Modulus (kg/cm²) |
|---|---|---|---|---|---|---|---|
| Example II-1 | 161.6 | 0.4 | 22 | 0.9099 | 0.50 | 4.9 | 16100 |
| Example II-2 | 164.5 | 0.5 | 15 | 0.9090 | 0.51 | 4.8 | 15500 |
| Example II-3 | 174.5 | 0.5 | 20 | 0.9094 | 0.50 | 4.9 | 15800 |
| Example II-4 | 170.5 | 1.0 | 21 | 0.9093 | 0.40 | 4.8 | 15700 |
| Comparative Example II-1 | 177.7 | 0.8 | 14 | 0.9075 | 0.45 | 4.3 | 14100 |
| Comparative Example II-2 | 48.9 | 0.2 | 17 | 0.9074 | 0.46 | 4.4 | 14000 |
| Comparative Example II-3 | 90.5 | 1.0 | 22 | 0.9065 | 0.45 | 4.5 | 13200 |

### Example II-5

A 200 litre stirring-type autoclave was thoroughly purged with propylene. Thereafter, 45 litre of purified n-heptane was introduced to the autoclave, to which 10.5 g of triethylaluminum (B) and 6.5 g of the solid catalyst component prepared in Example II-1 (A) were introduced at 70°C under propylene atmosphere. A first-step polymerization was initiated so that the temperature of the autoclave was raised to 75°C, and propylene was introduced to the autoclave at a feed rate of 9.0 kg/hour, with a hydrogen concentration being kept at 7.0 vol%. After 220 minutes, the introduction of propylene was stopped. The internal pressure of the autoclave at this time was 6.0 kg/cm²G. The polymerization was further continued at 75°C for 90 minutes. Thereafter, the propylene in the gas phase was purged until the pressure of the autoclave became 0.2 kg/cm²G. Next, after the temperature of the autoclave was lowered to 65°C, propylene and ethylene were introduced to the autoclave at feed rates of 1.13 kg/hour and 2.63 kg/hour, respectively, for a period of 79 minutes, thereby carrying out a second-step polymerization for further 30 minutes. The slurry obtained was filtered, and the product separated was dried to obtain 32.5 kg of a powdery block copolymer. The block copolymer was found to have an MFR of 15 g/10 min, a flexural modulus of 14,900 kg/cm², and an izod impact strength (23°C) of 7.3 kg•cm/cm².

### Comparative Example II-4

The procedure of Example II-4 was repeated except that 6.5 g of the solid catalyst component prepared in Comparative Example II-1 was used instead of the solid catalyst component used in Example II-4, thereby obtaining a block copolymer. As a result, 32.7 kg of a powdery block copolymer was obtained. The block copolymer thus obtained was found to have an MFR of 16 g /10 min, a flexural modulus of 13,400 kg/cm² and an izod impact strength (23°C) of 7.2 kg•cm/cm².

### Example II-6

### [Preparation of Component (A)]

Component (A) was prepared in the same manner as in Example II-1, except that isopropyl p-toluenesulfonate was used instead of the ethyl p-toluenesulfonate. The titanium content of the Component (A) obtained was 1.1% by weight.

### [Polymerization of Propylene]

Propylene was polymerized in the same manner as in Example II-1, except that the above-obtained Component (A) was used instead of the Component (A) used in Example II-1. As a result, 163.1 g of a polymer was obtained. From the filtrate, another crop of 0.5 g of the polymer was obtained. The polymer obtained was found to have an MFR of 20 g/10 min, a density of 0.9100 g/cc and a bulk density of 0.50 g/cc. The Q value (Mw/Mn) determined by means of GPC was 4.9.

### Example II-7

### [Preparation of Component (A)]

Component (A) was prepared in the same manner as in Example II-2, except that isopropyl p-toluenesulfonate was used instead of the ethyl p-toluenesulfonate. The titanium content of the Component (A) obtained was 1.0% by weight.

### [Polymerization of Propylene]

Propylene was polymerized in the same manner as in Example II-2, except that the above-obtained Component (A) was used instead of the Component (A) used in Example II-1. As a result, 166.2 g of a polymer was obtained. From the filtrate, another crop of 0.5 g of the polymer was obtained. The polymer obtained was found to have an MFR of 18 g/10 min, a density of 0.9094 g/cc and a bulk density of 0.51 g/cc. The Q value (Mw/Mn) determined by means of GPC was 4.9.

### Example II-8

The procedure of Example I-2 was repeated except that sec-butyl benzenesulfonate was used, instead of the isopropyl p-toluenesulfonate, as the component (A3) in the preparation of the Component (A) thereby polymerizing propylene in the same way. As a result, 175.6 g of a polymer was obtained. From the filtrate, another crop of 0.5 g of the polymer was obtained. The polymer obtained was found to have an MFR of 22 g/10 min, a density of 0.9098 g/cc and a bulk density of 0.51 g/cc. The Q value (Mw/Mn) determined by means of GPC was 4.9.

### Example II-9

### [Preparation of Component (A)]

Component (A) was prepared in the same manner as in Example II-4, except that cyclohexyl p-toluenesulfonate was used instead of the ethyl p-toluenesulfonate. The titanium content of the Component (A) thus obtained was 1.9% by weight.

### [Polymerization of Propylene]

Propylene was polymerized under the same conditions as in Example II-4. As a result, 171.8 g of a polymer was obtained. From the filtrate, another crop of 0.9 g of the polymer was obtained. The polymer obtained was found to have an MFR of 16 g/10 min, a density of 0.9095 g/cc and a bulk density of 0.41 g/cc. The Q value (Mw/Mn) determined by means of GPC was 4.8.

### Example II-10

The procedure of Example II-5 was repeated except that the same Component (A) as was used in Example II-6 was used instead of the Component (A) used in Example II-5, thereby carrying out the first- and second-step polymerization. The slurry obtained was filtered, and the product separated was dried to obtain 32.5 kg of a powdery block copolymer. The block copolymer obtained was found to have an MFR of 18 g/10 min, a flexural modulus of 15,100 kg/cm² and an izod impact strength (23°C) of 7.4 kg•cm/cm².

### Example II-11

The procedure of Example II-1 was repeated except that ethyl cellosolve acetate was used, instead of the phthaloyl chloride, as the component (A1) in the preparation of the Component (A), thereby polymerizing propylene in the same way. As a result, 159.9 g of a polymer was obtained. From the filtrate, another crop of 0.6 g of the polymer was obtained. The polymer obtained was found to have an MFR of 19 g/10 min, a density of 0.9094 g/cc and a bulk density of 0.49 g/cc. The Q value (Mw/Mn) determined by means of GPC was 4.8, and the flexural modulus was 15,600 kg/cm².

### Example II-12

The procedure of Example II-1 was repeated except that 2,2-diisopropyl-1,3-dimethoxypropane was used, instead of the phthaloyl chloride, as the component (A1) in the preparation of the Component (A), thereby polymerizing propylene in the same way. As a result, 162.4 g of a polymer was obtained. From the filtrate, another crop of 0.3 g of the polymer was obtained. The polymer obtained was found to have an MFR of 21 g/10 min, a density of 0.9095 g/cc and a bulk density of 0.50 g/cc. The Q value (Mw/Mn) determined by means of GPC was 4.6, and the flexural modulus was 14,400 kg/cm².

### Example II-13

The procedure of Example II-4 was repeated except that 2-t-butyl-2-methyl-1,3-dimethoxypropane was used, instead of the di-n-butyl phthalate, as the component (A1) in the preparation of the Component (A), thereby polymerizing propylene in the same way. As a result, 170.0 g of a polymer was obtained. From the filtrate, another crop of 0.4 g of the polymer was obtained. The polymer obtained was found to have an MFR of 23 g/10 min, a density of 0.9090 g/cc and a bulk density of 0.41 g/cc. The Q value (Mw/Mn) determined by means of GPC was 4.7, and the flexural modulus was 15,300 kg/cm².

### <Methods for Evaluating Practical Properties>

The practical properties of the polymers obtained in Examples II-5 and II-10 and Comparative Example II-4 were evaluated as follows. The following additives were added to the powdery block copolymers obtained in Examples II-5 and II-10 and Comparative Example II-4, and the mixtures were respectively pelletized by an extruder under the same conditions. The resultants were respectively molded into sheets, each having a thickness of 4 mm, by an injection molding press. The sheets thus obtained were evaluated in terms of the following physical properties.

### Additives:

| | |
|---|---|
| 2,6-tert-butyl phenol | 0.10% by weight |
| "RA 1010" (manufactured by Ciba-Giegy, Ltd.) | 0.05% by weight |
| Calcium stearate | 0.10% by weight |

### Measurement of Physical Properties:

Physical properties were determined in accordance with the following test methods.
(a) Flexural modulus: ASTM-D790
(b) Izod impact strength (23°C): ASTM-D256 (notched)

As mentioned previously in "SUMMARY OF THE INVENTION", alpha-olefin polymers having broad molecular-weight distribution and extremely high stereoregularity can be obtained in high yield according to the present invention; that is, alpha-olefin polymers suitable for automobile parts, household appliance parts, packaging materials and the like which are required to have higher rigidity can be obtained according to the present invention.

## Claims

1. A catalyst for alpha-olefin polymerisation comprising the following components ( A ), ( B ) and (C) in combination:
Component ( A ) which is a solid catalyst component prepared by bringing the following components ( A1 ), ( A2 ) and ( A3 ) into contact with each other:
component ( A1 ) which is a solid component comprising as essential components titanium, magnesium and a halogen,
component ( A2 ) which is at least one compound selected from organic acid ester compounds, organic acid halide compounds, and ether compounds, and
component ( A3 ) which is a sulfonic ester compound represented by the following general formula [I]:
R¹SO₃R² [I]
wherein R¹ and R² are a hydrocarbon group;
Component (B) which is an organoaluminum compound component; and
Component (C) which is a silicon compound represented by the following general formula [II]:
R³R⁴ ₃₋ₙSi(OR⁵)ₙ [II]
wherein R³ and R⁴, which may be the same or different, represent a hydrocarbon group or an alkoxy group, R⁵ is a hydrocarbon group, n is a number of 1 to 3.

2. The catalyst for alpha-olefin polymerisation according to claim 1, wherein the organic acid ester compounds and/or the organic acid halide compounds are carboxylic esters and/or carboxylic halides.

3. The catalyst for alpha-olefin polymerization according to claims 1 or 2, wherein the organic acid ester compounds and/or the organic acid halide compounds are at least one compound selected from the group of benzoic acid esters, phthalic acid diester compounds, cellosolve acetate compounds and phthalic dihalides.

4. The catalyst for alpha-olefin polymerization according to anyone of the claims 1 to 3, wherein R¹ in the sulfonic ester compound of the component (A3) is an aromatic, alicyclic or branched aliphatic hydrocarbon group, and R² is an aliphatic hydrocarbon group.

5. The catalyst for alpha-olefin polymerization according to claim 1, wherein the organic acid ester compound of the component (A2) is a carboxylic ester.

6. The catalyst for alpha-olefin polymerization according to claim 1 or 5, wherein the organic acid ester compound of the component (A2) is at least one compound selected from the group consisting of benzoic acid esters, phthalic acid diester compounds and cellosolve acetates.

7. The catalyst for alpha-olefin polymerization according to claim 1, wherein the organic acid halide compound of the component (A2) is a carboxylic acid halide.

8. The catalyst for alpha-olefin polymerization according to claim 1 or 7, wherein the organic acid halide compound of the component (A2) is a phthalic acid dihalide.

9. The catalyst for alpha-olefin polymerization according to claim 1, wherein the ether compound of the component (A2) is a diether.

10. The catalyst for alpha-olefin polymerisation according to any one of the claims 1 to 3 and 5 to 9, wherein R² in the sulfonic ester compound of the component (A3) is a branched aliphatic or alicyclic hydrocarbon group.

11. The catalyst for alpha-olefin polymerisation according to any one of the claims 1 to 3 and 4 to 10, wherein R¹ in the sulfonic ester compound of the component (A3) is an aromatic hydrocarbon group, and R² is a branched aliphatic or alicyclic hydrocarbon group.

12. The catalyst for alpha-olefin polymerisation according to claim 10, wherein R² in the sulfonic ester compound of the component (A3) is a branched aliphatic hydrocarbon group or an alicyclic hydrocarbon group in which the carbon atom directly bound to the oxygen atom is secondary or tertiary carbon.

13. A process for polymerizing an alpha-olefin, comprising bringing an alpha-olefin into contact with a catalyst for alpha-olefin polymerization according to any one of the claims 1 to 12.

14. A catalyst for alpha-olefin polymerization comprising the following components (A) and (B) in combination:
Component ( A) which is a solid catalyst component prepared by bringing the following components (A1), (A2) and (A3) into contact with each other:
component (A1) which is a solid component comprising as essential components titanium, magnesium and a halogen,
component (A2) which is a silicon compound represented by the following general formula [II]:
R³R⁴ ₃₋ₙSi(OR⁵)ₙ [II]
wherein R³ and R⁴, which may be the same or different, represent a hydrocarbon group or an alkoxy group, R⁵ is a hydrocarbon group, n is a number of 1 to 3, and
component (A3) which is a sulfonic ester compound represented by the following general formula [I]:
R¹SO₃R² [I]
wherein R¹ and R² are a hydrocarbon group;
Component (B) which is an organoaluminum compound component.

15. The catalyst for alpha-olefin polymerization according to claim 14, wherein the silicon compound of the component (A2) has a R³ which is a branched hydrocarbon group or alicyclic hydrocarbon group.

16. The catalyst for alpha-olefin polymerisation according to claims 14 or 15, wherein R¹ in the sulfonic ester compound of the component (A3) is an aromatic, alicyclic or branched aliphatic hydrocarbon group, and R² is an aliphatic hydrocarbon group.

17. The catalyst for alpha-olefin polymerisation according to claims 14 or 15, wherein R² in the sulfonic ester compound of the component (A3) is a branched aliphatic or alicyclic hydrocarbon group.

18. The catalyst for alpha-olefin polymerisation according to claim 14 or 15, wherein R¹ in the sulfonic ester compound of the component (A3) is an aromatic hydrocarbon group, and hydrocarbon R² is a branched aliphatic group.

19. A process for polymerizing an alpha-olefin, comprising bringing an alpha-olefin into contact with a catalyst for alpha-olefin polymerisation according to any one of the claims 14 to 18.

20. The catalyst for alpha-olefin polymerization according to claim 1 or 14, wherein the amount of the sulfonic ester compound of the component (A3) is 0.001 to 1000 in a mole ratio to the titanium component which constitutes the component (A1).

21. The catalyst for alpha-olefin polymerization according to claim 1 or 14, wherein the amount of the sulfonic ester compound of the component (A3) is 0.01 to 1000 in a mole ratio to the titanium component which constitutes the component (A1).

22. The catalyst for alpha-olefin polymerization according to claim 14 which further comprises
Component (C) which is a silicon compound represented by the following general formula (II):
R³R⁴ ₃₋ₙSi(OR⁵)ₙ [II]
wherein R³ and R⁴, which may be the same or different, represent a hydrocarbon group or an alkoxy group, R⁵ is a hydrocarbon group and n is a number of 1 to 3.

## Patentansprüche

1. Katalysator für die α-Olefin-Polymerisation, umfassend die folgenden Komponenten (A), (B) und (C) in Kombination:
Komponente (A):
eine feste Katalysatorkomponente, die durch In-Kontakt-Bringen der folgenden Komponenten (A1), (A2) und (A3) hergestellt wird:
Komponente (A1):
eine feste Komponente, umfassend als wesentliche Komponenten Titan, Magnesium und ein Halogen,
Komponente (A2):
mindestens eine Verbindung, ausgewählt aus organischen Säureesterverbindungen, organischen Säurehalogenidverbindungen und Etherverbindungen, und
Komponente (A3):
eine Sulfonsäureesterverbindung, dargestellt durch die folgende allgemeine Formel (I)
R¹SO₃R² (I)
wobei R¹ und R² eine Kohlenwasserstoffgruppe sind;
Komponente (B):
eine Organoaluminium-Verbindungskomponente; und
Komponente (C):
eine Siliciumverbindung, dargestellt durch die folgende allgemeine Formel (II)
R³R⁴ ₃₋ₙSi(OR⁵)ₙ (II)
wobei R³ und R⁴, die gleich oder verschieden sein können, eine Kohlenwasserstoffgruppe oder eine Alkoxygruppe darstellen, R⁵ eine Kohlenwasserstoffgruppe ist und n eine Zahl von 1 bis 3 ist.

2. Katalysator für die α-Olefin-Polymerisation gemäss Anspruch 1, wobei die organischen Säureesterverbindungen und/oder die organischen Säurehalogenidverbindungen Carbonsäureester und/oder Carbonsäurehalogenide sind.

3. Katalysator für die α-Olefin-Polymerisation gemäss Anspruch 1 oder 2, wobei die organischen Säureesterverbindungen und/oder die organischen Säurehalogenidverbindungen mindestens eine Verbindung, ausgewählt aus der Gruppe von Benzoesäureestern, Phthalsäurediesterverbindungen, Cellosolve-Acetatverbindungen und Phthalsäuredihalogenide sind.

4. Katalysator für die α-Olefin-Polymerisation gemäss einem der Ansprüche 1 bis 3, wobei R¹ in der Sulfonsäureesterverbindung der Komponente (A3) eine aromatische, alicyclische oder verzweigt-aliphatische Kohlenwasserstoffgruppe ist, und R² eine aliphatische Kohlenwasserstoffgruppe ist.

5. Katalysator für die α-Olefin-Polymerisation gemäss Anspruch 1, wobei die organische Säureesterverbindung der Komponente (A2) ein Carbonsäureester ist.

6. Katalysator für die α-Olefin-Polymerisation gemäss Anspruch 1 oder 5, wobei die organische Säureesterverbindung der Komponente (A2) mindestens eine Verbindung, ausgewählt aus der Gruppe bestehend aus Benzoesäureestern, Phthalsäurediesterverbindungen und Cellosolve-Acetaten ist.

7. Katalysator für die α-Olefin-Polymerisation gemäss Anspruch 1, wobei die organische Säurehalogenidverbindung der Komponente (A2) ein Carbonsäurehalogenid ist.

8. Katalysator für die α-Olefin-Polymerisation gemäss Anspruch 1 oder 7, wobei die organische Säurehalogenidverbindung der Komponente (A2) ein Phthalsäuredihalogenid ist.

9. Katalysator für die α-Olefin-Polymerisation gemäss Anspruch 1, wobei die Etherverbindung der Komponente (A2) ein Diether ist.

10. Katalysator für die α-Olefin-Polymerisation gemäss einem der Ansprüche 1 bis 3 oder 5 bis 9, wobei R² in der Sulfonsäureesterverbindung der Komponente (A3) eine verzweigt-aliphatische oder alicyclische Kohlenwasserstoffgruppe ist.

11. Katalysator für die α-Olefin-Polymerisation gemäss einem der Ansprüche 1 bis 3 und 4 bis 10, wobei R¹ in der Sulfonsäureesterverbindung der Komponente (A3) eine aromatische Kohlenwasserstoffgruppe ist und R² eine verzweigt-aliphatische oder alicyclische Kohlenwasserstoffgruppe ist.

12. Katalysator für die α-Olefin-Polymerisation gemäss Anspruch 10, wobei R² in der Sulfonsäureesterverbindung der Komponente (A3) eine verzweigt-aliphatische Kohlenwasserstoffgruppe oder eine alicyclische Kohlenwasserstoffgruppe ist, in der das an dem Sauerstoffatom direkt bindende Kohlenstoffatom ein sekundäres oder tertiäres Kohlenstoffatom ist.

13. Verfahren zur Polymerisation von α-Olefin, umfassend das In-Kontakt-Bringen eines α-Olefins mit einem Katalysator für die α-Olefin-Polymerisation gemäss einem der Ansprüche 1 bis 12.

14. Katalysator für die α-Olefin-Polymerisation, umfassend die folgenden Komponenten (A) und (B) in Kombination:
Komponente (A):
eine feste Katalysatorkomponente, die durch In-Kontakt-Bringen der folgenden Komponenten (A1), (A2) und (A3) hergestellt wird:
Komponente (A1):
eine feste Komponente, umfassend als wesentliche Komponenten Titan, Magnesium und ein Halogen,
Komponente (A2):
eine Siliciumverbindung, dargestellt durch die folgende allgemeine Formel (II)
R³R⁴ ₃₋ₙSi(OR⁵)ₙ (II)
wobei R³ und R⁴, die gleich oder verschieden sein können, eine Kohlenwasserstoffgruppe oder eine Alkoxygruppe darstellen, R⁵ eine Kohlenwasserstoffgruppe ist und n eine Zahl von 1 bis 3 ist,
Komponente (A3):
eine Sulfonsäureesterverbindung, dargestellt durch die folgende allgemeine Formel (I)
R¹SO₃R² (I)
wobei R¹ und R² eine Kohlenwasserstoffgruppe sind;
Komponente (B):
eine Organoaluminium-Verbindungskomponente.

15. Katalysator für die α-Olefin-Polymerisation gemäss Anspruch 14, wobei die Siliciumverbindung der Komponente (A2) ein R³ aufweist, welches eine verzweigte Kohlenwasserstoffgruppe oder eine alicyclische Kohlenwasserstoffgruppe darstellt.

16. Katalysator für die α-Olefin-Polymerisation gemäss Anspruch 14 oder 15, wobei R¹ in der Sulfonsäureesterverbindung der Komponente (A3) eine aromatische, alicyclische oder verzweigt-aliphatische Kohlenwasserstoffgruppe ist, und R² eine aliphatische Kohlenwasserstoffgruppe ist.

17. Katalysator für die α-Olefin-Polymerisation gemäss Anspruch 14 oder 15, wobei R² in der Sulfonsäureesterverbindung der Komponente (A3) eine verzweigt-aliphatische oder alicyclische Kohlenwasserstoffgruppe ist.

18. Katalysator für die α-Olefin-Polymerisation gemäss Anspruch 14 oder 15, wobei R¹ in der Sulfonsäureesterverbindung der Komponente (A3) eine aromatische Kohlenwasserstoffgruppe ist und der Kohlenwasserstoff (R²) eine verzweigte aliphatische Gruppe ist.

19. Verfahren zur Polymerisation von α-Olefin, umfassend das In-Kontakt-Bringen eines α-Olefins mit einem Katalysator für die a-Olefin-Polymerisation gemäss einem der Ansprüche 14 bis 18.

20. Katalysator für die α-Olefin-Polymerisation gemäss Anspruch 1 oder 14, wobei die Menge der Sulfonsäureesterverbindung der Komponente (A3) 0,001 bis 1000 mol pro Mol der Titankomponente der Komponente (Al) beträgt.

21. Katalysator für die α-Olefin-Polymerisation gemäss Anspruch 1 oder 14, wobei die Menge der Sulfonsäureesterverbindung der Komponente (A3) 0,01 bis 1000 mol pro Mol der Titankomponente der Komponente (A1) beträgt.

22. Katalysator für die α-Olefin-Polymerisation gemäss Anspruch 14, weiterhin umfassend:
Komponente (C):
welche eine Siliciumverbindung, dargestellt durch die folgende allgemeine Formel (II)
R³R⁴ ₃₋ₙSi(OR⁵)ₙ (II)
wobei R³ und R⁴, die gleich oder verschieden sein können, eine Kohlenwasserstoffgruppe oder eine Alkoxygruppe darstellen, R⁵ eine Kohlenwasserstoffgruppe ist und n eine Zahl von 1 bis 3 ist.

## Revendications

1. Catalyseur pour la polymérisation d'alpha-oléfines, comprenant les composants (A), (B) et (C) ci-après en combinaison:
Composant (A) à savoir un composant de catalyseur solide préparé en amenant les composants (A1), (A2) et (A3) ci-après en contact l'un avec l'autre:
composant (A1) à savoir un composant solide comprenant, à titre de composants essentiels, du titane, du magnésium et un halogène,
composant (A2) à savoir au moins un composé choisi parmi des composés d'esters d'acides organiques, des composés d'halogénures d'acides organiques et des composés d'éthers, et
composant (A3) à savoir un composé d'ester sulfonique répondant à la formule générale [I] ci-après:
R¹SO₃R² [I]
où R¹ et R² représentent un groupe d'hydrocarbure;
Composant (B) à savoir un composant de composé d'organoaluminium; et
Composant (C) à savoir un composé de silicium répondant à la formule générale [II] ci-après:
R³R⁴ ₃₋ₙSi(OR⁵)ₙ [II]
où R³ et R⁴, qui peuvent être identiques ou différents, représentent un groupe d'hydrocarbure ou un groupe alcoxy, R⁵ représente un groupe d'hydrocarbure, n représente un nombre de 1 à 3.

2. Catalyseur pour la polymérisation d'alpha-oléfines selon la revendication 1, dans lequel les composés d'esters d'acides organiques et/ou les composés d'halogénures d'acides organiques sont des esters carboxyliques et/ou des halogénures carboxyliques.

3. Catalyseur pour la polymérisation d'alpha-oléfines selon la revendication 1 ou 2, dans lequel les composés d'esters d'acides organiques et/ou les composés d'halogénures d'acides organiques représentent au moins un composé choisi parmi le groupe constitué par des esters d'acides benzoïques, par des composés de diesters d'acides phtaliques, par des composés d'acétates de glycol d'éthyle et par des dihalogénures phtaliques.

4. Catalyseur pour la polymérisation d'alpha-oléfines selon l'une quelconque des revendications 1 à 3, dans lequel R¹ dans le composé d'ester sulfonique du composant (A3) est un groupe d'hydrocarbure aromatique, alicyclique ou aliphatique ramifié et R² représente un groupe d'hydrocarbure aliphatique.

5. Catalyseur pour la polymérisation d'alpha-oléfines selon la revendication 1, dans lequel le composé d'ester d'acide organique du composant (A2) est un ester carboxylique.

6. Catalyseur pour la polymérisation d'alpha-oléfines selon la revendication 1 ou 5, dans lequel le composé d'ester d'acide organique du composant (A2) représente au moins un composé choisi parmi le groupe constitué par des esters d'acides benzoïques, par des composés de diesters d'acides phtaliques et par des acétates de glycol d'éthyle.

7. Catalyseur pour la polymérisation d'alpha-oléfines selon la revendication 1, dans lequel le composé d'halogénure d'acide organique du composant (A2) est un halogénure d'acide carboxylique.

8. Catalyseur pour la polymérisation d'alpha-oléfines selon la revendication 1 ou 7, dans lequel le composé d'halogénure d'acide organique du composant (A2) est un dihalogénure d'acide phtalique.

9. Catalyseur pour la polymérisation d'alpha-oléfines selon la revendication 1, dans lequel le composé d'éther du composant (A2) est un diéther.

10. Catalyseur pour la polymérisation d'alpha-oléfines selon l'une quelconque des revendications 1 à 3 et 5 à 9, dans lequel R² dans le composé d'ester sulfonique du composant (A3) est un groupe d'hydrocarbure alicyclique ou aliphatique ramifié.

11. Catalyseur pour la polymérisation des alpha-oléfines selon l'une quelconque des revendications 1 à 3 et 4 à 10, dans lequel R¹ dans le composé d'ester sulfonique du composant (A3) est un groupe d'hydrocarbure aromatique et R² représente un groupe d'hydrocarbure alicyclique ou aliphatique ramifié.

12. Catalyseur pour la polymérisation d'alpha-oléfines selon la revendication 10, dans lequel R² dans le composé d'ester sulfonique du composant (A3) est un groupe d'hydrocarbure aliphatique ramifié ou un groupe d'hydrocarbure alicyclique dans lequel l'atome de carbone directement lié à l'atome d'oxygène est un atome de carbone secondaire ou tertiaire.

13. Procédé pour la polymérisation d'une alpha-oléfine, comprenant le fait d'amener une alpha-oléfine en contact avec un catalyseur pour la polymérisation d'alpha-oléfines selon l'une quelconque des revendications 1 à 12.

14. Catalyseur pour la polymérisation d'alpha-oléfines, comprenant les composants (A) et (B) ci-après en combinaison:
Composant (A) à savoir un composant de catalyseur solide préparé en amenant les composants (A1), (A2) et (A3) ci-après en contact l'un avec l'autre:
composant (A1) à savoir un composant solide comprenant, à titre de composants essentiels, du titane, du magnésium et un halogène,
composant (A2) à savoir un composé de silicium répondant à la formule générale [II] ci-après:
R³R⁴ ₃₋ₙSi(OR⁵)ₙ [II]
où R³ et R⁴, qui peuvent être identiques ou différents, représentent un groupe d'hydrocarbure ou un groupe alcoxy, R⁵ représente un groupe d'hydrocarbure, n représente un nombre de 1 à 3, et
composant (A3) à savoir un composé d'ester sulfonique répondant à la formule générale [I] ci-après:
R¹SO₃R² [I]
où R¹ et R² représentent un groupe d'hydrocarbure; et
Composant (B) à savoir un composant de composé d'organoaluminium.

15. Catalyseur pour la polymérisation d'alpha-oléfines selon la revendication 14, dans lequel le composé de silicium du composant (A2) possède un radical R³ qui représente un groupe d'hydrocarbure ramifié ou un groupe d'hydrocarbure alicyclique.

16. Catalyseur pour la polymérisation d'alpha-oléfines selon la revendication 14 ou 15, dans lequel R¹ dans le composé d'ester sulfonique du composant (A3) est un groupe d'hydrocarbure aromatique, alicyclique ou aliphatique ramifié et R² représente un groupe d'hydrocarbure aliphatique.

17. Catalyseur pour la polymérisation d'alpha-oléfines selon la revendication 14 ou 15, dans lequel R² dans le composé d'ester sulfonique du composant (A3) est un groupe d'hydrocarbure alicyclique ou aliphatique ramifié.

18. Catalyseur pour la polymérisation d'alpha-oléfines selon la revendication 14 ou 15, dans lequel R¹ dans le composé d'ester sulfonique du composant (A3) représente un groupe d'hydrocarbure aromatique et le radical d'hydrocarbure R² représente un groupe aliphatique ramifié.

19. Procédé pour polymériser une alpha-oléfine, comprenant le fait d'amener une alpha-oléfine en contact avec un catalyseur pour la polymérisation d'alpha-oléfines selon l'une quelconque des revendications 14 à 18.

20. Catalyseur pour la polymérisation d'alpha-oléfines selon la revendication 1 ou 14, dans lequel la quantité du composé d'ester sulfonique du composant (A3) s'élève de 0,001 à 1000 dans un rapport molaire au composant de titane qui constitue le composant (A1).

21. Catalyseur pour la polymérisation d'alpha-oléfines selon la revendication 1 ou 14, dans lequel la quantité du composé d'ester sulfonique du composant (A3) s'élève de 0,01 à 1000 dans un rapport molaire au composant de titane qui constitue le composant (A1).

22. Catalyseur pour la polymérisation d'alpha-oléfines selon la revendication 1 ou 14, qui comprend en outre:
Composant (C) à savoir un composé de silicium répondant à la formule générale [II] ci-après:
R³R⁴ ₃₋ₙSi(OR⁵)ₙ [II]
où R³ et R⁴, qui peuvent être identiques ou différents, représentent un groupe d'hydrocarbure ou un groupe alcoxy, R⁵ représente un groupe d'hydrocarbure et n représente un nombre de 1 à 3.
